# EUROPÄISCHE PATENTSCHRIFT

(11) **EP 2 809 425 B1**
(45) Veröffentlichungstag und Bekanntmachung des Hinweises auf die Patenterteilung: **13.04.2016**
(21) Anmeldenummer: 12809127.9
(22) Anmeldetag: 27.12.2012
(51) Int. Cl.: B01J 20/20, B01D 53/04, B01D 53/02, B01D 46/00

(54) **ADSORPTIVES FILTERMEDIUM**
ADSORPTIVE FILTER MEDIUM
MATIÈRE FILTRANTE ADSORBANTE

(30) Priorität: 28.03.2012 DE 102012006160; 17.04.2012 DE 102012007503
(43) Veröffentlichungstag der Anmeldung: 10.12.2014
(73) Patentinhaber: Blücher GmbH, 40699 Erkrath (DE)
(72) Erfinder: BÖHRINGER, Bertram, 42115 Wuppertal (DE); GONZALEZ, Omar, Guerra, 45276 Essen (DE); ECKLE, Ilsebill, 45886 Gelsenkirchen (DE)
(74) Vertreter: Von Rohr Patentanwälte Partnerschaft mbB
(86) Internationale Anmeldenummer: PCT/EP2012/005385
(87) Internationale Veröffentlichungsnummer: WO 2013/143570

(56) Entgegenhaltungen:
- EP-A1- 1 468 718
- EP-A1- 1 712 268
- EP-A1- 1 825 899
- WO-A1-94/20193
- DE-A1-102006 059 783
- DE-A1-102007 050 971
- DE-A1-102008 050 264
- DE-A1-102008 058 248
- US-A- 5 605 746
- US-A1- 2008 264 259

## Beschreibung

Die vorliegende Erfindung betrifft das technische Gebiet adsorptiver Materialien und insbesondere adsorptive Filter, welche beispielsweise zur Aufreinigung von Fluiden, wie Gas- bzw. Luftströmen, eingesetzt werden können.

Insbesondere betrifft die vorliegende Erfindung ein adsorptives Filtermedium auf Basis einer Mehrzahl eines ersten Filterelements sowie einer Mehrzahl eines von dem ersten Filterelement verschiedenen zweiten Filterelements, wobei das Filtermedium ein optimiertes Adsorptionsverhalten bzw. eine optimierte Adsorptionskinetik aufweist, insbesondere im Hinblick auf das Durchbruchverhalten von chemischen und/oder biologischen Gift- bzw. Schadstoffen, wie Kampfstoffen.

Darüber hinaus betrifft die vorliegende Erfindung Verwendungen des Filtermediums nach der Erfindung für sorptive, insbesondere adsorptive Anwendungen bzw. für die Entfernung von Schadstoffen, insbesondere gasförmigen Schadstoffen, oder von umweltschädlichen, gesundheitsschädlichen bzw. toxischen Substanzen oder Gasen.

Die vorliegende Erfindung betrifft zudem Filter und Filtermaterialien, welche unter Verwendung mindestens eines erfindungsgemäßen Filtermediums hergestellt sind bzw. welche mindestens ein erfindungsgemäßes Filtermedium aufweisen.

Zur Aufreinigung oder Aufbereitung von Fluiden bzw. fluiden Medien, wie insbesondere Gasen, Gasströmen oder Gasgemischen, wie z. B. Luft, kommen im Stand der Technik oftmals partikuläre Systeme auf Basis von Teilchen mit spezifischer Wirkung (z. B. Adsorbentien, Ionenaustauscher, Katalysatoren etc.) zum Einsatz. So ist beispielsweise die Verwendung von Adsorberpartikeln zur Entfernung von Gift- oder Schadstoffen und Gerüchen aus Gas- oder Luftströmen, insbesondere auch im Bereich des ABC-Schutzes, aus dem Stand der Technik bekannt.

Die Verwendung loser Schüttungen der vorgenannten Teilchen, insbesondere in Form von sogenannten Schüttfiltern, ist dabei eine bedeutsame Anwendungsform, um die betreffenden Partikel bzw. Teilchen, wie z. B. Adsorberpartikel, mit dem aufzureinigendem Fluid in Kontakt zu bringen.

Da bei kleinen Partikeln, wie z. B. Adsorberpartikeln, im Verhältnis zum Teilchendurchmesser eine größere Oberfläche zur Verfügung steht als bei größeren Partikeln, ist bei den kleineren Partikeln erwartungsgemäß die Wirkungsweise besser. Allerdings führen kleine Partikel in loser Schüttung zu einem hohen und als solchen nicht kontrollierbaren Druckverlust, und zudem wird durch kleine Partikel die Bildung von Kanälen innerhalb der Schüttung gefördert, was zu einer erhöhten Durchbruchgefahr im Hinblick auf zu adsorbierende Gift- bzw. Schadstoffe führt. Aus diesem Grund ist die bei Schüttungen verwendete Teilchengröße oftmals nur ein Kompromiss, so dass meist nicht die für die Anwendung optimalen Teilchengrößen zum Einsatz kommen können. Insbesondere kommen zu Zwecken der Erreichung wirtschaftlicher Betriebsbedingungen, insbesondere eines akzeptablen Druckverlustes, oftmals größere Partikel (z. B. Adsorberpartikel) zum Einsatz als es für eine optimale Nutzung der Adsorptionseffizienz und für ein optimiertes Durchbruchverhalten - d. h. die Zeitdauer bis zum Durchtritt der zu entfernenden Substanzen in einer kritischen Menge bzw. Konzentration am Filterausgang - wünschenswert wäre, so dass oft ein beträchtlicher Teil der theoretisch vorhandenen Kapazität nicht genutzt werden kann.

In diesem Zusammenhang beschreibt die DE 36 24 975 C2 einen Schüttschichtfilter auf Basis eines mit körnigem Schüttgut gefüllten Schachts, dessen Seitenwände für das zu filternde Medium durchlässig sind, wobei die Schüttschicht über ein Bandsystem quer zur Durchströmung des aufzureinigenden Gasgemisches bewegt bzw. verschoben wird. Nachteilig bei dem dort beschriebenen System ist, dass es zum einen konstruktiv aufwendig ist und damit für kompakte Filtersysteme ungeeignet ist und dass zum anderen aufgrund der verwendeten Schüttung des Adsorptionsmaterials eine nicht immer optimale Filtereffizienz vorliegt.

Darüber hinaus ist es im Stand der Technik bekannt, die zum Entfernen von Gift- bzw. Schadstoffen und Gerüchen aus fluiden Medien eingesetzten Partikel, wie z. B. Adsorberpartikel, auf einem Träger zu befestigen bzw. anzubringen, um so die resultierenden Druckverluste des Filtersystems - insbesondere im Vergleich zu Schüttungen - zu verringern. Derartige Filtersysteme weisen jedoch mit unter verkürzte Einsatz- bzw. Standzeiten auf. Insbesondere ist bei derartigen Filtern das Durchbruchverhalten in Bezug auf die zu adsorbierenden bzw. zu entfernenden Substanzen problematisch, was insbesondere bei hochtoxischen Substanzen, wie chemischen und/oder biologischen Gift- bzw. Schadstoffen äußerst kritisch ist, da bereits geringste Mengen der in Rede stehenden Substanzen drastische Auswirkungen auf die Gesundheit bzw. das Leben von damit konfrontierten Personen hervorrufen. Derartige Filter des Standes der Technik, bei welchen das Adsorptionsmaterial an einer Trägerstruktur fixiert ist, weisen im Allgemeinen zwar einen niedrigen (Durch-)Strömungswiderstand auf, jedoch neigt im Anwendungszustand das Konzentrationsprofil der zu entfernenden Schad- bzw. Giftstoffe innerhalb des Filters insbesondere aufgrund von Dispersionseffekten dazu, sich in Hauptströmungsrichtung des aufzureinigenden Fluids bzw. Gasgemisches übermäßig auszubreiten, was zu einer Verringerung der Durchbruchzeit und damit zu verschlechterten Einsatz- bzw. Standzeiten des Filters führt.

Aus der DE 40 20 246 A1 ist eine Vorrichtung zum Adsorbieren von Gasen aus einem Luftstrom bzw. einem Trägergas bekannt, bei welcher eine zur Verwirbelung geeignete Schüttung eines Adsorptionsmittels eingesetzt wird und wobei zudem die dort eingesetzten Adsorptionsmittelteilchen zusätzlich auf einem nachgeschalteten Träger nach Art eines Festbettes fixiert sind, wobei das Festbett im Anwendungszustand einen geringen Druckverlust aufweisen soll. Die dort beschriebene Vorrichtung ist aufgrund der vorgesehenen Verwirbelungszone insgesamt großvolumig ausgebildet und ist mitunter mit dem Nachteil behaftet, dass das Festbett durch im Anwendungszustand verwirbelte Partikel zugesetzt werden kann und dass insbesondere im Hinblick auf Schad- bzw. Giftstoffen ein optimales (Anfangs-)Durchbruchverhalten nicht immer gewährleistet ist.

Aus der DE 38 13 564 A1 und aus der zu derselben Patentfamilie gehörenden EP 0 338 551 A2 ist eine Aktivkohlefilterschicht für ABC-Schutzmasken bekannt, welche ein hochluftdurchlässiges, im Wesentlichen formstabiles dreidimensionales Trägergerüst umfasst, an welchem eine Schicht von körnigen, insbesondere kugelförmigen Aktivkohleteilchen fixiert ist, wobei es sich bei dem Trägergerüst um ein Geflecht aus Drähten, Monofilamenten oder Stegen bzw. um eine schaumbasierte Struktur handeln kann. Das beschriebene System ist jedoch insbesondere nicht im Hinblick auf ein verlängertes Durchbruchverhalten für zu entfernende bzw. zu adsorbierende Substanzen bzw. Gase, wie biologische und/oder chemische Schad- bzw. Giftstoffe, optimiert.

Des Weiteren sind aus der DE 43 43 358 A1 Aktivkohle enthaltende poröse Körper bekannt, welche aus Platten und Agglomeraten von vermahlener, in eine poröse SiO₂-Matrix eingebauter Aktivkohle bestehen. Insbesondere werden poröse Platten oder Körper mit adsorbierenden Eigenschaften beschrieben, bei denen Aktivkohlekörner oder Aktivkohlekügelchen bzw. Aktivkohle enthaltende Partikel mit Hilfe einer Silikatlösung aneinander zum Haften gebracht sind und nachfolgend die Silikatbrücken in Silicagelbrücken umgewandelt und die resultierenden Körper getrocknet werden. Nachteilig hierbei ist die festgelegte Geometrie dieser porösen Körper sowie deren mangelnde Flexibilität und Kompressibilität, infolge derer sie für Filteranwendungen unter mechanischer Belastung nicht geeignet sind. Weiterhin nachteilig ist, dass die aktivkohlehaltigen Partikel vollständig mit der Silikatlösung benetzt werden, so dass ein großer Teil der Kapazität dieser Partikel nicht mehr für adsorptive Prozesse zur Verfügung steht. Das beschriebene System ist zudem in keiner Weise im Hinblick auf das Durchbruchverhalten von chemischen bzw. biologischen Schad- bzw. Giftstoffen optimiert.

Die US 2008/264259 A1 betrifft ein Filtrationsmedium, welches eine Feinfilterschicht auf Basis von Nanofasern und eine Grobfilterschicht auf Basis von Mikrofasern enthält, wobei die Grobfilterschicht auf die Feinfilterschicht aufgebracht ist und wobei die Grobfilterschicht proximal zu einer Strömungsrichtung eines Fluids und die Feinfilterschicht distal zu dieser Strömungsrichtung angeordnet sind.

Die DE 10 2006 059 783 A1 betrifft ein Filtermodul zum Filtern von hindurchströmenden Abgasen, wobei das Filtermodul ein erstes Trägerelement, mindestens eine Verteilermatte sowie mindestens eine Aktivkohlematte und ein zweites Trägerelement umfasst, wobei die Verteilermatte und die Aktivkohlematte zwischen dem ersten und dem zweiten Trägerelement angeordnet sind. Gemäß einer Ausführungsform können mehrere Aktivkohlematten zum Einsatz kommen.

Zudem betrifft die WO 94/20193 A1 eine Aufreinigungsvorrichtung zur Entfernung partikelförmiger Verunreinigungen und zur Entfernung von gasförmigen Kontaminationen, wobei hierzu plattenförmige Partikel- bzw. Sorptionsfilterelemente eingesetzt werden. Der Einsatz von Kohle zu Adsorptionszwecken soll dabei vermieden werden.

Die EP 1 712 268 A1 betrifft ein Filterelement mit einem Filterkörper, welcher eine Anströmseite und eine Abströmseite aufweist, wobei der Filterkörper schichtweise aufgebaut ist und wobei der Filterkörper eine erste Schicht mit körnigen Adsorbentien und eine weitere Schicht mit Aktivkohle umfasst.

Die DE 10 2008 O50 264 A1 betrifft ein Filterelement zur Filterung von Feinstaub, welches elektrisch geladene Stapelfasern und Endlosfasern umfasst, wobei diesbezüglich elektrisch geladene Stapelfasern und Endlosfasern mit einem mittleren Durchmesser von höchstens 10 µm eingesetzt werden sollen.

Die US 5 605 746 A betrifft eine faserartige Struktur, welche ein Mikrofasernetz aufweist, welches innerhalb der faserartigen Struktur angeordnet ist, wobei zudem eine vliesartige und aus Kompositfasern mit funktionalen Partikeln hergestellte Matrix aus Makrofasern in Bezug auf die faserartige Struktur eingesetzt werden soll.

Darüber hinaus betrifft die EP 1 468 718 A1 eine Filtereinheit, welche als Adsorptionsmaterial Adsorbentien auf Basis von Aktivkohle enthält, wobei mindestens ein erstes Filterelement als Adsorptionsmaterial kornförmige Aktivkohle und wobei mindestens ein zweites Filterelement eine Kombination aus kornförmiger Aktivkohle und Aktivkohlefasern umfasst.

Die EP 1 825 899 A1 betrifft ein Adsorptionsfiltermaterial mit integriertem Partikel- bzw. Aerosolschutz mit mehrschichtigem Aufbau, wobei das Filtermaterial eine Trägerschicht, eine der Trägerschicht zugeordnete Adsorptionsschicht und eine Abdeckschicht umfasst, wobei zusätzlich eine Partikel- bzw. Aerosolfilterschicht vorgesehen ist.

Weiterhin betrifft die DE 10 2008 058 248 A1 einen adsorptiven Formkörper, welcher monolithisch bzw. einstückig ausgebildet ist, wobei der Formkörper aus einer Vielzahl adsorptiver Strukturen auf Basis von Agglomeraten von Adsorberpartikeln aufgebaut ist.

Die DE 10 2007 050 971 A1 betrifft diskrete Aktivkohlekörner bzw. -partikel, welche vorzugsweise in Kugelform vorliegen, wobei die beschriebenen Aktivkohlepartikel definierte Eigenschaften hinsichtlich des Gesamtporenvolumens, des Porendurchmessers sowie der BET-Oberfläche aufweisen sollen.

Die im Stand der Technik bekannten Filtersysteme weisen somit im Ergebnis nicht immer gute Druckverlusteigenschaften und zudem keine optimalen Einsatz- bzw. Standzeiten auf, insbesondere nicht im Hinblick auf das Entfernen bzw. die Adsorption von hochtoxischen Substanzen aus Gas- bzw. Luftströmen, so dass die im Stand der Technik bekannten Systeme nicht immer in optimaler Weise für einen industriell-technischen Einsatz bzw. für einen Einsatz als Flächenfilter bzw. Atemschutzfilter insbesondere im Bereich des ABC-Schutzes geeignet sind. Die Filtersysteme des Standes der Technik besitzen oftmals eine nur geringe Adsorptionskapazität, und auch die Adsorptionskinetik ist mitunter nicht optimal, so dass zu einer entsprechenden Kompensation mitunter große Volumina bzw. große Mengen an Adsorbentien erforderlich sind, was aber zu einer weiteren Verschlechterung der Druckverlusteigenschaften führt und zudem kompakten Bauweisen bzw. Aufbauten der Filter abträglich ist.

Die im Stand der Technik bekannten Systeme auf Basis von Schüttbetten gehen somit im Anwendungszustand oftmals mit insgesamt hohen Druckverlusten bzw. (Durch-)Strömungswiderständen einher, und die im Stand der Technik zur Vermeidung der obigen Nachteile vorgesehenen Filterstrukturen mit einer Befestigung bzw. Fixierung von adsorptiven Teilchen bzw. Adsorbentien auf Trägermaterialien sind mit dem Nachteil behaftet, dass bei insgesamt steigendem Volumen die Adsorptionskapazität verringert und zudem das Adsorptionsverhalten im Vergleich zu Schüttsystemen mitunter nicht verbessert ist, insbesondere im Hinblick auf das Durchbruchverhalten von zu entfernenden bzw. zu adsorbierenden Schadstoffen.

Die mitunter nicht immer ausreichende Adsorptionskapazität führt unter Einsatzbedingungen zu einer raschen Erschöpfung des Filtersystems, so dass die Filtermaterialien des Standes der Technik im Rahmen ihrer Anwendung häufig ausgetauscht werden müssen. Zudem besitzen aus dem Stand der Technik bekannte Adsorptionsfiltereinheiten eine nicht immer ausreichende "Spontaneität" bzw. Adsorptionskinetik, so dass es im Anwendungsfall oftmals schon nach kurzer Einsatzzeit zu unerwünschten Durchbrüchen kommen kann.

Daher besteht im Hinblick auf die Entfernung bzw. Adsorption von Fluiden, insbesondere auf Basis gasförmiger toxischer Substanzen, wie biologischer und/oder chemischer Schad- bzw. Giftstoffe, insgesamt ein großer Bedarf, leistungsfähige Filtersysteme bereitzustellen, welche bei insbesondere im Hinblick auf den jeweiligen Anwendungszweck optimiertem Volumen bzw. optimierter geometrischer Formgebung gleichzeitig über ein verbessertes Adsorptionsverhalten auf Basis eines verlängerten Durchbruchverhaltens für die zu adsorbierenden Substanzen aufweisen, um hierdurch schädigende bzw. störende Schad-, Gift- oder Geruchsstoffe aus Gasströmen bzw. Luft mit hoher Effizienz zu entfernen.

Vor diesem Hintergrund liegt daher der vorliegenden Erfindung die Aufgabe zugrunde, adsorptive Systeme auf Basis eines adsorptiven Filtermediums bereitzustellen, welche die zuvor geschilderten Nachteile des Standes der Technik zumindest weitgehend vermeiden oder aber wenigstens abzuschwächen imstande sind.

Insbesondere ist eine Aufgabe der vorliegenden Erfindung darin zu sehen, adsorptive Filtermedien bereitzustellen, welche über eine verbesserte Effizienz hinsichtlich der Entfernung bzw. Adsorption von toxischen Substanzen, insbesondere in Form von biologischen bzw. chemischen Gift- bzw. Schadstoffen, aufweisen, wobei insbesondere das (Anfangs-)Durchbruchverhalten in Bezug auf die zu entfernenden Substanzen verbessert werden soll, um auf diese Art und Weise eine verlängerte Einsatz- bzw. Standzeit zu ermöglichen. Insbesondere sollen die erfindungsgemäßen Filtersysteme auf Basis eines adsorptiven Filtermediums zudem unter Anwendungsbedingungen insgesamt einen geringen Druckverlust bzw. geringe (Durch-)Strömungswiderstände aufweisen, so dass eine hohe Eignung für filtertechnische Anwendungen, beispielsweise im Rahmen industrieller bzw. technischer Anwendungen, aber auch im Bereich des ABC-Schutzes gegeben sein soll.

Die zuvor geschilderte Aufgabenstellung wird erfindungsgemäß durch den Gegenstand von Patentanspruch 1 gelöst, welcher das erfindungsgemäße adsorptive Filtersystem (synonym auch als Filtereinheit bzw. Filterstruktur bezeichnet) mit einer Mehrzahl eines ersten Filterelements (nachfolgend gleichermaßen mit der Bezeichnung F1 bzw. synonym mit dem Bezugszeichen 1 gekennzeichnet) und mit einer Mehrzahl eines von dem ersten Filterelements F1 verschiedenen zweiten Filterelements (nachfolgend auch mit der Bezeichnung F2 bzw. synonym mit dem Bezugszeichen 2 gekennzeichnet) betrifft; weitere, vorteilhafte Weiterbildungen und Ausgestaltungen dieses Erfindungsaspekts sind Gegenstand der entsprechenden Unteransprüche.

Weiterer Gegenstand der vorliegenden Erfindung sind die erfindungsgemäßen Verwendungen des Filtermediums nach der Erfindung, wie es Gegenstand des entsprechenden unabhängigen Verwendungsanspruchs ist.

Darüber hinaus sind Gegenstand der vorliegenden Erfindung Filter und Filtermaterialien, welche unter Verwendung des Filtermediums nach der Erfindung hergestellt sind bzw. welche das Filtermedium nach der Erfindung aufweisen.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei nachfolgenden Werte-, Zahlen- und Bereichsangaben die angegebenen Werte bzw. Bereiche nicht beschränkend zu verstehen sind; es versteht sich für den Fachmann, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass alle im Folgenden genannten Werte bzw. Parameterangaben oder dergleichen grundsätzlich mit genormten oder explizit angegebenen Bestimmungsverfahren oder aber mit dem Fachmann an sich geläufigen Bestimmungsmethoden bestimmt bzw. ermittelt werden können.

Dies vorausgeschickt wird im Folgenden die vorliegende Erfindung näher beschrieben.

Gegenstand der vorliegenden Erfindung ist somit - gemäß einem ersten Aspekt der vorliegenden Erfindung - ein adsorptives Filtermedium, insbesondere zur Aufreinigung von Gasen und/oder Gasgemischen, vorzugsweise Luft, und/oder insbesondere zur Entfernung von chemischen und/oder biologischen Giften und/oder Schadstoffen aus Gasen und/oder Gasgemischen, vorzugsweise Luft,
wobei das Filtermedium
- eine Mehrzahl eines ersten Filterelements F1 mit einem ersten Adsorptionsmaterial in Form von Adsorbenspartikeln und
- eine Mehrzahl eines von dem ersten Filterelement F1 verschiedenen zweiten Filterelements F2 mit einem zweiten Adsorptionsmaterial in Form von Adsorbenspartikeln
aufweist,
wobei das erste Adsorptionsmaterial und das zweite Adsorptionsmaterial, unabhängig voneinander, aus kornförmiger Aktivkohle gebildet ist,
wobei die ersten Filterelemente F1 und die zweiten Filterelemente F2 stapelförmig angeordnet und/oder aufeinander gestapelt sind,
wobei mindestens ein erstes Filterelement F1 stromaufwärts zu mindestens einem zweiten Filterelement F2 angeordnet ist,
wobei das erste Filterelement F1 und das zweite Filterelement F2 voneinander verschiedene Druckverluste und/oder voneinander verschiedene (Durch-)Strömungswiderstände aufweisen, wobei das zweite Filterelement F2 einen größeren Druckverlust und/oder (Durch-)Strömungswiderstand als das erste Filterelement F1 aufweist, und
wobei stromabwärts als zuletzt positioniertes Filterelement F1, F2 ein zweites Filterelement F2 angeordnet ist, wobei das stromabwärts zuletzt positionierte zweite Filterelement F2 einen höheren Druckverlust und/oder (Durch-)Strömungswiderstand als die stromaufwärts zu dem zuletzt positionierten Filterelement angeordneten Filterelemente F1, F2 aufweist.

Die grundlegende Idee der vorliegenden Erfindung ist somit darin zu sehen, ein adsorptives Filtermedium bereitzustellen, welches einzelne bzw. diskrete Filterelemente F1 und F2 aufweist, welche unterschiedliche Eigenschaften im Hinblick auf den jeweiligen Druckverlust bzw. den jeweiligen (Durch-)Strömungswiderstand aufweisen. Erfindungsgemäß werden, wie nachfolgend noch ausführlich angeführt, die jeweiligen Filterelemente F1 und F2 innerhalb des adsorptiven Filtermediums nach der Erfindung derart angeordnet, dass im Filtermedium entlang der Hauptdurchströmungsrichtung des Filtermediums mit dem aufzureinigenden Fluid durch die jeweiligen Filterelemente F1 und F2 ausgebildete Bereiche unterschiedlicher Druckverluste bzw. (Durch-)Strömungswiderstände vorliegen bzw. resultieren. Die unterschiedlichen Eigenschaften der jeweiligen Filterelemente F1 und F2 können beispielsweise durch unterschiedliche (Material-)Dichten bzw. Beladungsdichten, wie nachfolgend ausgeführt, der jeweiligen Filterelemente F1 und F2 vorgegeben bzw. eingestellt werden. Dabei können erfindungsgemäß im Filtermedium gewissermaßen sprunghafte oder graduelle Dichteunterschiede entlang der Hauptströmungsrichtung vorliegen bzw. vorgegeben werden.

Erfindungsgemäß liegen in dem adsorptiven Filtermedium nach der Erfindung somit Bereiche mit hohem Druckverlust bzw. hohem (Durch-)Strömungswiderstand einerseits und Bereiche mit geringem Druckverlust bzw. geringem (Durch-)Strömungswiderstand vor, wobei die diesbezügliche Ausbildung bzw. Abstimmung erfindungsgemäß insbesondere auch vor dem Hintergrund des beabsichtigten Einsatzzweckes im Hinblick auf die Natur bzw. Eigenschaften der zu adsorbierenden bzw. zu entfernenden Substanzen durch die gezielte Anordnung und Ausbildung der jeweiligen Filterelemente F1 und F2 innerhalb des Filtermediums nach der Erfindung maßgeschneidert bzw. individuell eingestellt werden können.

Erfindungsgemäß liegen bei dem Filtermedium nach der Erfindung somit einerseits Bereiche mit einem geringen (Durch-)Strömungswiderstand insbesondere auf Basis von für das Fluid hochdurchlässigen Filtrationsschichten und andererseits Bereiche mit einem höheren (Durch-)Strömungswiderstand insbesondere auf Basis von hocheffizienten Filtrationsschichten vor. Denn - wie nachfolgend noch im Detail ausgeführt - ist die erfindungsgemäße Anordnung der Filterelemente derart, dass diejenigen Filterelemente mit geringerem Druckverlust bzw. (Durch-)Strömungswiderstand, wie sie beispielsweise durch Filterelemente geringer Dichte bzw. geringer Adsorbentienbeladung gebildet werden, in Hauptströmungsrichtung vor solchen Filterelementen mit größerem Druckverlust bzw. (Durch-)Strömungswiderstand, wie sie beispielsweise durch Filterelemente hoher Dichte bzw. Adsorbentienbeladung gebildet werden, und somit stromaufwärts zu den Filterelementen mit hohem Druckverlust bzw. (Durch-)Strömungswiderstand angeordnet werden. Die erfindungsgemäß bevorzugte Anordnung der jeweiligen Filterelemente führt insgesamt zu einer relativ langen Kontaktzeit der zu entfernenden bzw. zu adsorbierenden Substanzen, insbesondere in dem Bereich mit geringerem Druckverlust bzw. (Durch-)Strömungswiderstand.

Die erfindungsgemäße Konzeption führt dabei in völlig überraschender Weise zu einer verbesserten Filtereffizienz und signifikanten Verlängerung der Durchbruchzeiten der zu entfernenden bzw. zu adsorbierenden Substanzen, so dass auf Basis der erfindungsgemäßen Konzeption insgesamt ein äußerst leistungsfähiges Filtermedium bereitgestellt wird, welches sich insbesondere auch zur Entfernung von mitunter hochtoxischen Substanzen, wie beispielsweise biologischen bzw. chemischen Gift- bzw. Schadstoffen, eignet. Auch vor diesem Hintergrund eignet sich das erfindungsgemäße adsorptive Filtermedium nicht nur für industrielle bzw. technische Anwendungen, sondern insbesondere auch für einen Einsatz im Rahmen des ABC-Schutzes, insbesondere im Hinblick auf einen Einsatz als Gasfilter für ABC-Schutzmasken oder dergleichen.

Durch den speziellen Aufbau des erfindungsgemäßen Filtermediums wird zudem gewährleistet, dass der Druckverlust bzw. der (Durch-)Strömungswiderstand des Filtermediums insgesamt optimiert ist, wobei in der Gesamtheit - d. h. bezogen auf das Filtermedium als solches bzw. als Ganzes - relativ geringe Druckverluste realisiert werden, welche denen üblicher Trägersysteme entsprechen, was gleichermaßen die Anwendungseigenschaften signifikant verbessert, insbesondere im Hinblick auf hohe volumenbezogene Durchsätze der aufzureinigenden Fluide für industrielle Anwendungen und einen verbesserten Tragekomfort durch einen geringen Atemwiderstand beim Einsatz der erfindungsgemäßen Filtermedien in oder als Filter beispielsweise für ABC-Schutzmasken oder dergleichen.

Weiterhin ist durch den Einsatz hocheffizienter Filterelemente eine kompakte Bauweise der resultierenden Filtermedien nach der Erfindung möglich.

Zudem wird aufgrund der erfindungsgemäßen Konzeption eine Vergleichmäßigung von Konzentrationsschwankungen der zu entfernenden bzw. zu adsorbierenden (Schad-)Stoffe entlang der jeweiligen Querschnitte der eingesetzten Filterelemente - ohne sich auf diese Theorie beschränken zu wollen - durch eine Verbesserung bzw. Begünstigung der Bewegung des Fluids bzw. der Gase und/oder des Gasgemisches, insbesondere der aufzureinigenden Luft, auch quer zur Hauptströmungsrichtung des erfindungsgemäßen Filtermediums ermöglicht, was gleichermaßen zu einer Verbesserung der Adsorptionseffizienz und des Durchbruchverhaltens führt.

Erfindungsgemäß werden durch den speziellen Aufbau des Filtermediums nach der Erfindung sogenannte Dispersionseffekte kompensiert, was zu einer weiterführenden Verbesserung der Filtereigenschaften führt.

Erfindungsgemäß wird somit erstmalig ein adsorptives Filtermedium bereitgestellt, welches aufgrund der speziellen Auswahl und Anordnung von das Filtermedium nach der Erfindung ausbildenden Filterelementen mit jeweils unterschiedlichen Eigenschaften hinsichtlich der jeweiligen Druckverluste bzw. (Durch-)Strömungswiderstände über eine verbesserte Ausnutzung des Filtrations- bzw. Adsorptionspotentials insgesamt verfügt, welches nämlich dem theoretischen Filtrationsvermögen der eingesetzten Adsorptionsmaterialien angenähert ist. Die in völlig überraschender Weise resultierende verbesserte Ausnutzung der Adsorptionskapazität des erfindungsgemäßen Filtermediums führt dabei zu einer Verlängerung der Nutzungsdauer des Filtermediums nach der Erfindung. Diesbezüglich kann sogar eine weitere Verringerung bzw. Reduktion des (Gesamt-)Druckverlustes des Filtermediums nach der Erfindung durch das Weglassen bzw. Aussparen von mitunter überflüssigem Filtermaterial ermöglicht werden.

Die jeweiligen Druckverluste bzw. (Durch-)Strömungswiderstände der eingesetzten Filterelemente F1 und F2 können durch die gezielte Auswahl der Beschaffenheit der jeweiligen Filterelemente F1 und F2 vorgegeben werden, worauf nachfolgend noch im Detail angegangen wird. Insbesondere können die Materialeigenschaften bzw. -parameter der die jeweiligen Filterelemente F1 und F2 ausbildenden Komponenten im Hinblick auf vorgegebene Druckverluste bzw. (Durch-)Strömungswiderstände ausgewählt werden, beispielsweise was die eingesetzten Trägermaterialien und Adsorbentien anbelangt. Die vorstehenden Angaben sind in keiner Weise beschränkend, und der Fachmann ist jederzeit in der Lage, die jeweiligen Filterelemente F1 und F2 insbesondere auf Basis der hierfür eingesetzten Materialien bzw. Komponenten derart auszugestalten, dass die gewünschten Druckverluste bzw. (Durch-)Strömungswiderstände erhalten werden.

Das erfindungsgemäße adsorptive Filtermedium vereint im Ergebnis somit ein verbessertes Adsorptionsvermögen - insbesondere im Hinblick auf verlängerte Durchbruchzeiten - sowie optimierte Druckverluste bzw. (Durch-)Strömungswiderstände - insbesondere im Vergleich zu Schüttbettsystemen - in ein und demselben Material, was im Ergebnis zu einem hochleistungsfähigen Filtermedium mit verbesserten Eigenschaften führt, welches insbesondere auch die zugrundeliegende ABEK-Anforderungen zu erfüllen imstande sind (vgl. DIN EN 14387).

Mit anderen Worten betrifft die vorliegende Erfindung ein adsorptives Filtermedium, insbesondere zur Aufreinigung von Gasen und/oder Gasgemischen, vorzugsweise Luft, und/oder insbesondere zur Entfernung von chemischen und/oder biologischen Giften und/oder Schadstoffen aus Gasen und/oder Gasgemischen, vorzugsweise Luft, wobei das Filtermedium eine Mehrzahl eines ersten Filterelements F1 mit einem ersten Adsorptionsmaterial in Form von Adsorbenspartikeln und eine Mehrzahl eines von dem ersten Filterelement F1 verschiedenen zweiten Filterelements F2 mit einem zweiten Adsorptionsmaterial in Form von Adsorbenspartikeln aufweist. Dabei kann es insbesondere vorgesehen sein, dass das erste Filterelement F1 und das zweite Filterelement F2 voneinander verschiedene Eigenschaften und/oder Parameter aufweisen, so dass das erste Filterelement F1 einen niedrigeren Druckverlust und/oder einen niedrigeren (Durch-)Strömungswiderstand aufweist als das zweite Filterelement F2 bzw. dass das zweite Filterelement F2 einen höheren Druckverlust und/oder einen höheren (Durch-)Strömungswiderstand aufweist als das erste Filterelement F1.

Zudem kann es erfindungsgemäß vorgesehen sein, dass die jeweiligen ersten Filterelemente F1 voneinander verschiedene Druckverluste bzw. (Durch-)-Strömungswiderstände aufweisen, jedoch mit der Maßgabe, dass diese jeweils geringer sind als diejenigen der jeweiligen zweiten Filterelemente F2. Für die zweiten Filterelemente F2 gilt entsprechend, dass diese voneinander verschiedene Druckverluste bzw. voneinander verschiedene (Durch-)Strömungswiderstände aufweisen können, jedoch mit der Maßgabe, dass diese jeweils größer sind als diejenigen der jeweiligen ersten Filterelemente F1.

Gleichermaßen betrifft die vorliegende Erfindung ein adsorptives Filtermedium, insbesondere zur Aufreinigung von Gasen und/oder Gasgemischen, vorzugsweise Luft, und/oder insbesondere zur Entfernung von chemischen und/oder biologischen Giften und/oder Schadstoffen aus Gasen und/oder Gasgemischen, vorzugsweise Luft, wobei das Filtermedium eine Mehrzahl eines ersten Filterelements F1 mit einem ersten Adsorptionsmaterial in Form von Adsorbenspartikeln und eine Mehrzahl eines von dem ersten Filterelement F1 verschiedenen zweiten Filterelements F2 mit einem zweiten Adsorptionsmaterial in Form von Adsorbenspartikeln aufweist, wobei das erste Filterelement F1 einen niedrigeren Druckverlust und/oder einen niedrigeren (Durch-)Strömungswiderstand aufweist als das zweite Filterelement F2 und/oder wobei das zweite Filterelement F2 einen höheren Druckverlust und/oder einen höheren (Durch-)Strömungswiderstand aufweist als das erste Filterelement F1.

Zudem betrifft die vorliegende Erfindung gleichermaßen ein adsorptives Filtermedium, insbesondere zur Aufreinigung von Gasen und/oder Gasgemischen, vorzugsweise Luft, und/oder insbesondere zur Entfernung von chemischen und/oder biologischen Giften und/oder Schadstoffen aus Gasen und/oder Gasgemischen, vorzugsweise Luft, wobei das Filtermedium eine Mehrzahl eines ersten Filterelements F1 mit einem ersten Adsorptionsmaterial in Form von Adsorbenspartikeln und eine Mehrzahl eines von dem ersten Filterelement F1 verschiedenen zweiten Filterelements F2 mit einem zweiten Adsorptionsmaterial in Form von Adsorbenspartikeln aufweist, wobei das erste Filterelement F1 und das zweite Filterelement F2 voneinander verschiedene Eigenschaften und/oder voneinander verschiedene Parameter aufweisen, wobei die Eigenschaft und/oder der Parameter ausgewählt ist aus der Gruppe von (Material-)Dichte der Filterelemente F1, F2, Beladungsdichte der Filterelemente F1, F2, insbesondere Beladungsdichte mit dem Adsorptionsmaterial, Druckverlust und/oder (Durch-)Strömungswiderstand, insbesondere mit der Maßgabe, dass das erste Filterelement in Bezug auf die zuvor genannten Eigenschaften und/oder Parameter im Vergleich zu dem zweiten Filterelement F2 die kleineren Werte aufweist.

Der Begriff "adsorptives Filtermedium", synonym auch als adsorptive Filtereinheit bzw. adsorptive Filterstruktur bezeichnet, wie er im Rahmen der vorliegenden Erfindung verwendet wird, ist dabei sehr breit zu verstehen und bezieht sich auf eine stapelförmige Anordnung bzw. eine Abfolge auf Basis einzelner Filterelemente zur Ausbildung des Filtermediums nach der Erfindung. Dabei kann es im Rahmen der vorliegenden Erfindung vorgesehen sein, dass die jeweiligen Filterelemente sozusagen lose aufeinander gestapelt sind. Gleichermaßen ist es im Rahmen der vorliegenden Erfindung möglich, dass die jeweiligen Filterelemente miteinander verbunden bzw. aneinander fixiert sind, beispielsweise über ein entsprechendes Bindemittel bzw. unter Verwendung eines Klebstoffs, beispielsweise auf Basis eines Schmelzklebstoffs, wobei die Verbindung der jeweiligen Filterelemente beispielsweise durch einen punktförmigen Klebstoffauftrag oder auf Basis eines insbesondere wirren bzw. ungeordneten Fasergeflechts des eingesetzten Klebstoffs bzw. Bindemittels erfolgen kann.

Was weiterhin die Begriffe "Druckverlust" sowie "(Durch-)Strömungswiderstand", wie sie im Rahmen der vorliegenden Erfindung verwendet werden, anbelangt, so sind diese synonym zu verstehen und beschreiben insbesondere die physikalischen Eigenschaften des erfindungsgemäßen Filtermediums im Hinblick auf den Durchtritt des aufzureinigenden Fluids, insbesondere in seinem Anwendungszustand. Insbesondere beziehen sich die in Rede stehenden Begriffe auf die entsprechenden Eigenschaften des erfindungsgemäßen Filtermediums, wie sie sich beim Durchströmen bzw. Durchtreten eines Fluids, insbesondere von Gasen bzw. Gasgemischen, vorzugsweise Luft, durch das erfindungsgemäße Filterelement ergeben. Die diesbezüglichen Verfahren zur Bestimmung der in Rede stehenden Eigenschaften bzw. Parameter sind dem Fachmann als solche wohlbekannt. Insbesondere kann der Druckverlust bzw. der (Durch-)Strömungswiderstand entsprechend bzw. in Anlehnung an die Norm DIN EN 14387 bestimmt werden, insbesondere bei einer Strömungsgeschwindigkeit, bezogen auf das Leerrohr ("Leerrohrgeschwindigkeit"), von 6,4 cm/s. Grundsätzlich sind aber auch andere Bestimmungsmethoden geeignet, um die in Rede stehenden Parameter des Druckverlustes bzw. des (Durch-)Strömungswiderstands zu bestimmen.

Was das erfindungsgemäße Filtermedium anbelangt, so kann es erfindungsgemäß vorgesehen sein, dass das Filtermedium mindestens zwei, insbesondere mindestens drei, vorzugsweise vier oder mehr, erste Filterelemente F1 aufweist. Gleichermaßen kann es erfindungsgemäß vorgesehen sein, dass das Filtermedium nach der Erfindung mindestens zwei, insbesondere mindestens drei, vorzugsweise vier oder mehr, zweite Filterelemente F2 aufweist. Im Rahmen der vorliegenden Erfindung ist es somit gemäß einer bevorzugten Ausführungsform vorgesehen, dass das Filtermedium nach der Erfindung eine Vielzahl an Filterelementen F1, F2 aufweist, wobei die jeweilige Anzahl der Filterelemente F1 bzw. F2 unabhängig voneinander und insbesondere vor dem Hintergrund des jeweiligen Anwendungs- bzw. Einsatzwecks ausgewählt bzw. aufeinander abgestimmt werden kann.

Was die Anordnung bzw. Positionierung der jeweiligen Filterelemente F1 bzw. F2 innerhalb des Filtermediums nach der Erfindung anbelangt, so ist es erfindungsgemäß vorgesehen, dass mindestens ein erstes Filterelement F1 stromaufwärts zu mindestens einem zweiten Filterelement F2 angeordnet ist. Mit anderen Worten ist es erfindungsgemäß vorgesehen, dass mindestens ein zweites Filterelement F2 stromabwärts zu mindestens einem ersten Filterelement F1 angeordnet ist. Somit verhält es sich im Rahmen der vorliegenden Erfindung insbesondere derart, dass, bezogen auf den Anwendungszustand des erfindungsgemäßen Filtermediums, als erstes und somit dem aufzureinigenden Fluid zugewandtes und sozusagen am Filtereingang positioniertes Element mindestens ein erstes Filterelement F1 insbesondere mit niedrigem Druckverlust und/oder (Durch-)Strömungswiderstand vorgesehen ist, während auf der dem aufzureinigenden Fluid abgewandten Seite des erfindungsgemäßen Filtermediums und somit sozusagen am Filterausgang vorzugsweise mindestens ein zweites Filterelement F2 insbesondere mit hohem Druckverlust und/oder (Durch-)Strömungswiderstand angeordnet ist.

Was in diesem Zusammenhang den Begriff "stromaufwärts", wie er erfindungsgemäß verwendet wird, anbelangt, so bezieht sich dieser Begriff insbesondere auf eine relative Anordnung eines eingesetzten Filterelements in Bezug auf mindestens ein weiteres Filterelement innerhalb des erfindungsgemäßen Filtermediums, wobei die Anordnung des Filterelements in Bezug auf die weiteren Filterelemente derart erfolgt, dass das eingesetzte Filterelement im Vergleich zu den weiteren Filterelementen im Anwendungszustand entgegen der Hauptströmungsrichtung des Fluids zu den weiteren Filterelementen und somit sozusagen vor den weiteren Filterelementen angeordnet ist. Analog hierzu verhält es sich in Bezug auf den erfindungsgemäß verwendeten Begriff "stromabwärts" derart, dass ein für das erfindungsgemäße Filtermedium verwendetes Filterelement in Bezug auf mindestens ein weiteres für das erfindungsgemäße Filtermedium eingesetzte Filterelement in Hauptströmungsrichtung des Fluids nach dem weiteren Filterelement angeordnet ist.

Insbesondere verhält es sich im Rahmen der vorliegenden Erfindung derart, dass mindestens ein Filterelement F1, F2 mit geringerem Druckverlust und/oder geringerem (Durch-)Strömungswiderstand stromaufwärts zu mindestens einem weiteren Filterelement F1, F2 mit im Vergleich zu dem stromaufwärts angeordneten Filterelement F1, F2 höherem Druckverlust und/oder höherem (Durch-)Strömungswiderstand angeordnet ist.

Aufgrund der speziellen Anordnung der Filterelemente F1 und F2 zueinander, wonach mindestens ein Filterelement mit einem zu dem vorgeschalteten Filterelement höheren Druckverlust stromabwärts zu dem vorgeschalteten Filterelement mit dem folglich geringeren Druckverlust als das nachgeschaltete Filterelement angeordnet ist, ist es in völlig überraschender Weise gelungen, das Adsorptionsverhalten des erfindungsgemäßen Filtermediums signifikant zu verbessern, insbesondere was eine Verlängerung der Durchbruchzeit in Bezug auf zu entfernende bzw. zu adsorbierende Substanzen, wie biologische und/oder chemische Schad- bzw. Giftstoffe, anbelangt. Ohne sich auf diese Theorie beschränken zu wollen, wird durch die zweckgerichtete Positionierung mindestens eines Filterelements mit höherem Druckverlust stromabwärts zu mindestens einem Filterelement mit geringerem Druckverlust die Verweilzeit des aufzureinigenden Fluids in dem Filtermedium insgesamt erhöht und werden zudem Konzentrationsschwankungen bzw. Unterschiede in Bezug auf zu entfernende bzw. zu adsorbierende Schad- bzw. Giftstoffe entlang des jeweiligen Filterquerschnitts durch Begünstigung der Fluidbewegung auch quer zur Hauptströmungsrichtung verringert, was insgesamt die Filtereffizienz und insbesondere das Durchbruchverhalten in völlig überraschender Weise verbessert.

In diesem Zusammenhang hat es sich im Rahmen der vorliegenden Erfindung insbesondere als vorteilhaft erwiesen, wenn das Filtermedium nach der Erfindung stromaufwärts von mindestens einem ersten Filterelement F1 begrenzt ist. Gleichermaßen ist es erfindungsgemäß von Vorteil, wenn stromabwärts als zuerst positioniertes Filterelement mindestens ein erstes Filterelement F1 angeordnet ist.

In diesem Zusammenhang ist es gleichermaßen von Vorteil, wenn das Filtermedium nach der Erfindung stromaufwärts von mindestens einem Filterelement F1, F2, insbesondere von einem ersten Filterelement F1, mit geringerem Druckverlust und/oder geringerem (Durch-)Strömungswiderstand begrenzt ist. Insbesondere kann es erfindungsgemäß vorgesehen sein, dass stromabwärts als zuerst positioniertes Filterelement F1, F2 mindestens ein Filterelement F1, F2, insbesondere das erste Filterelement F1, mit geringerem Druckverlust und/oder geringerem (Durch-)Strömungswiderstand angeordnet ist.

In diesem Zusammenhang verhält es sich im Rahmen der vorliegenden Erfindung derart, dass das Filterelement F1, F2, insbesondere das Filterelement F1, mit dem geringeren Druckverlust und/oder geringerem (Durch-)Strömungswiderstand einen geringen Druckverlust und/oder geringeren (Durch-)Strömungswiderstand als das das Filtermedium nach der Erfindung stromabwärts begrenzende und/oder stromabwärts zuletzt positionierte Filterelement F2 mit hohem Druckverlust und/oder (Durch-)Strömungswiderstand aufweist.

Von besonderem Vorteil ist es zudem, wenn das stromabwärts zuerst positionierte Filterelement F1, F2, insbesondere das zuerst positionierte erste Filterelement F1, einen geringeren Druckverlust bzw. (Durch-)Strömungswiderstand als die nachfolgenden Filterelemente F1, F2 (d. h. die stromabwärts zu dem zuerst positionierten Filterelement angeordneten Filterelemente F1, F2) aufweist. Das stromabwärts zuerst positionierte Filterelement F1, F2 kann insbesondere den geringsten Druckverlust bzw. (Durch-)Strömungswiderstand der für das Filtermedium nach der Erfindung insgesamt verwendeten Filterelemente F1, F2 aufweisen.

Gemäß einer weiteren erfindungsgemäßen Ausführungsform kann es jedoch auch vorgesehen sein, dass mindestens ein zusätzliches Filterelement F1, F2 mit höherem Druckverlust bzw. höherem (Durch-)Strömungswiderstand, insbesondere mindestens ein zusätzliches zweites Filterelement F2, den nachfolgenden Filterelementen F1, F2 stromaufwärts vorgeschaltet ist bzw. in Hauptdurchströmungsrichtung das zuerst angeordnete Filterelement F1, F2 bildet. Durch diese Anordnung kann - ohne sich auf diese Theorie beschränken zu wollen - eine gewisse zusätzliche Vergleichmäßigung des Strömungsverhaltens des in das erfindungsgemäße Filtermedium einströmenden Fluids, insbesondere Gas bzw. Gasgemisches, erreicht werden, wodurch die Filtereffizienz nochmals erhöht werden kann. Dabei sollte das gegebenenfalls vorgeschaltete Filterelement F1, F2, insbesondere das zweite Filterelement F2, einen höheren Druckverlust bzw. einen höheren (Durch-)Strömungswiderstand als die nachfolgenden Filterelemente F1, F2 mit dem niedrigeren Druckverlust bzw. (Durch-)Strömungswiderstand, insbesondere als die zweiten Filterelemente F2, aufweisen.

Erfindungsgemäß ist es zudem vorgesehen, dass das Filtermedium nach der Erfindung stromabwärts von mindestens einem zweiten Filterelement F2 begrenzt ist bzw. dass stromabwärts als zuletzt positioniertes Filterelement F1, F2 ein zweites Filterelement F2 angeordnet bzw. positioniert ist.

Weiterhin ist es erfindungsgemäß vorgesehen und vorteilhaft, dass das stromabwärts zuletzt positionierte zweite Filterelement F2 einen höheren Druckverlust bzw. einen höheren (Durch-)Strömungswiderstand als die vorgeschalteten bzw. vorgelagerten Filterelemente F1, F2 (d. h. die stromaufwärts zu dem zuletzt positionierten Filterelement angeordneten Filterelement F2) aufweist. Das stromabwärts zuletzt positionierte Filterelement F2 weist den höchsten Druckverlust bzw. (Durch-)Strömungswiderstand der für das Filtermedium nach der Erfindung insgesamt verwendeten Filterelemente F1, F2. auf.

Das Filtermedium nach der Erfindung ist zudem derart ausgebildet, dass die ersten Filterelemente F1 und die zweiten Filterelemente F2 stapelförmig angeordnet bzw. aufeinander gestapelt sind. Wie zuvor angeführt, können die in Rede stehenden Filterelemente F1, F2 lose aufeinander gestapelt oder aber miteinander verbunden, insbesondere verklebt sein, beispielsweise unter Einsatz eines punktförmig und/oder netzartig aufgetragenen (Schmelz-)Klebers bzw. (Schmelz-)Klebernetzes.

Was darüber hinaus die weiteren Anordnungsmöglichkeiten der jeweiligen Filterelemente F1, F2 innerhalb des Filtermediums nach der Erfindung anbelangt, so kann diese in weiten Bereichen variieren:

So kann es erfindungsgemäß vorgesehen sein, dass die ersten Filterelemente F1 und die zweiten Filterelemente F2 alternierend bzw. zueinander abwechselnd bzw. periodisch angeordnet sind.

Darüber hinaus kann es erfindungsgemäß vorgesehen sein, dass die ersten Filterelemente F1 blockweise bzw. in Form mindestens eines Blocks B1 angeordnet sind. In diesem Zusammenhang kann der Block B1 der ersten Filterelemente F1 mindestens zwei, vorzugsweise drei oder mehr, erste Filterelemente F1 umfassen. Insbesondere können mehrere erste Filterelemente F1, insbesondere mindestens zwei, vorzugsweise drei oder mehr, erste Filterelemente F1 aufeinander gestapelt bzw. in unmittelbarer Abfolge zueinander angeordnet sein.

Gemäß einer weiteren erfindungsgemäßen Ausführungsform kann es zudem vorgesehen sein, dass auch die zweiten Filterelemente F2 blockweise bzw. in Form mindestens eines Blocks B2 angeordnet sind. In diesem Zusammenhang kann der Block B2 der zweiten Filterelemente F2 mindestens zwei, vorzugsweise drei oder mehr, zweite Filterelemente F2 umfassen. Insbesondere können mehrere zweite Filterelemente F2, insbesondere mindestens zwei, vorzugsweise drei oder mehr, zweite Filterelemente F2 aufeinander gestapelt bzw. in unmittelbarer Abfolge zueinander in dem erfindungsgemäßen Filtermedium angeordnet sein.

In diesem Zusammenhang liegt es im Rahmen der vorliegenden Erfindung, wenn die ersten Filterelemente F1 bzw. die zweiten Filterelemente F2 jeweils blockweise alternierend bzw. blockweise zueinander abwechselnd und/oder blockweise periodisch angeordnet sind.

Darüber hinaus ist es erfindungsgemäß zudem von Vorteil, wenn das Filtermedium nach der Erfindung stromaufwärts von mindestens einem Block B1 der ersten Filterelemente F1 begrenzt ist. Diesbezüglich sollte der Block B1 mindestens zwei, vorzugsweise drei oder mehr, erste Filterelemente F1 umfassen. Insbesondere kann es erfindungsgemäß vorgesehen sein, dass als zuerst positionierter Block mindestens ein Block B1 der ersten Filterelemente F 1 angeordnet ist. In diesem Zusammenhang sollte der Block B1 mindestens zwei, vorzugsweise drei oder mehr, erste Filterelemente F1 umfassen.

Was das erfindungsgemäße Filtermedium weiterhin anbelangt, so kann das Filtermedium stromabwärts von mindestens einem Block B2 der zweiten Filterelemente F2 begrenzt sein. Diesbezüglich sollte der Block B2 mindestens zwei, vorzugsweise drei oder mehr, zweite Filterelemente F2 umfassen. Insbesondere sollte stromabwärts als zuletzt positionierter Block mindestens ein Block der zweiten Filterelemente F2 angeordnet sein. In diesem Zusammenhang sollte der Block B2 mindestens zwei, vorzugsweise drei oder mehr, zweite Filterelemente F2 umfassen.

Insbesondere umfasst der Block B1 auf Basis der ersten Filterlemente F1 somit Filterelemente F1 mit im Vergleich zu den den weiteren Block B2 bildenden Filterelementen F2 geringeren Druckverlusten bzw. geringeren (Durch-)-Strömungswiderständen.

In entsprechender Weise umfasst der Block B auf Basis der zweiten Filterlemente F2 somit insbesondere Filterelemente F2 mit im Vergleich zu den den weiteren Block bildenden Filterelementen F1 höheren Druckverlusten bzw. höheren (Durch-)Strömungswiderständen.

Neben der Anzahl und Anordnung der jeweiligen Filterelemente F1, F2 in dem erfindungsgemäßen Filtermedium kommt auch der Form bzw. der körperlichen Ausbildung der zugrundeliegenden Filterelemente F1 bzw. F2 eine bedeutende Rolle zu:

So kann das erste Filterelement F1 bzw. das zweite Filterelement F2 bzw. das resultierende Filtermedium nach der Erfindung kastenförmig bzw. quaderförmig bzw. zylinderförmig ausgebildet sein, wobei eine zylinderförmige Form erfindungsgemäß bevorzugt ist.

Erfindungsgemäß sollten das erste Filterelement F1 bzw. das zweite Filterelement F2 jeweils zwei zumindest im Wesentlichen parallel zueinander angeordnete bzw. zumindest im Wesentlichen planare bzw. ebene Grenzflächen bzw. Haupterstreckungsebenen aufweisen. Diesbezüglich kann es erfindungsgemäß vorgesehen sein, dass die Filterelemente F1, F2 derart angeordnet bzw. gestapelt sind, dass sich die jeweils zueinander angeordneten Grenzflächen bzw. Hauptersteckungsebenen (Haupterstreckungsflächen) berühren, insbesondere zumindest im Wesentlichen vollflächig aneinanderliegen bzw. in Kontakt stehen. Insbesondere sind die Filterelemente F1, F2 somit derart angeordnet, dass diese mit den zueinander flächen- bzw. abmessungsgleichen Flächen aufeinanderliegen. Hierdurch wird eine besonders gute Stapelung der Filterelemente F1, F2 innerhalb des erfindungsgemäßen Filtermediums mit entsprechend hoher Stabilität unter Vermeidung von der Adsorptionskapazität abträglichen größeren bzw. unregelmäßigen Hohlräumen zwischen den jeweiligen Filterelementen F1, F2 ermöglicht.

Insbesondere kann es erfindungsgemäß vorgesehen sein, dass das erste Filterelement F1 bzw. das zweite Filterelement F2, insbesondere das erste Filterelement F1 und das zweite Filterelement F2, mit ihren jeweiligen zumindest im Wesentlichen planaren und/oder ebenen Grenzflächen und/oder mit ihren jeweiligen Haupterstreckungsebenen zumindest im Wesentlichen senkrecht zur Hauptdurchströmungsrichtung des Filtermediums angeordnet sind.

Weiterhin kann es erfindungsgemäß vorgesehen sein, dass das erste Filterelement F1 und das zweite Filterelement F2 zumindest im Wesentlichen identische Breiten und/oder Tiefen und/oder zumindest im Wesentlichen identische Durchmesser aufweisen, bezogen auf die Ausdehnung im Anwendungszustand quer bzw. senkrecht zur Hauptdurchströmungsrichtung (in diesem Zusammenhang bezieht sich die Breite bzw. die Tiefe auf eine insbesondere rechteckige Grundfläche bzw. Haupterstreckungsebene der Filterelemente F1, F2, während sich der Durchmesser auf eine insbesondere kreisförmige Grundfläche bzw. Haupterstreckungsebene bezieht). Mit anderen Worten bezieht sich die Breite bzw. Tiefe sowie der Durchmesser der jeweiligen Filterelemente auf die Erstreckung der jeweiligen Filterelemente F1, F2 quer bzw. senkrecht zur Hauptdurchströmungsrichtung des Filtermediums.

Erfindungsgemäß hat es sich zudem als vorteilhaft erwiesen, wenn die Höhe h1 des ersten Filterelements F1 größer ist als die Höhe h2 des zweiten Filterelements F2, bezogen auf die Ausdehnung der jeweiligen Elemente parallel zur Hauptdurchströmungsrichtung. Die Höhen h1 bzw. h2 beziehen sich somit insbesondere auf die Erstreckung der Filterelemente F1, F2 parallel zur Hauptdurchströmungsrichtung des erfindungsgemäßen Filtermediums.

In diesem Zusammenhang kann es erfindungsgemäß vorgesehen sein, dass die Höhe h1 des ersten Filterelements F1 um einen Faktor im Bereich von 1,1 bis 500, insbesondere 1,3 bis 200, vorzugsweise 1,5 bis 100, bevorzugt 1,8 bis 75, besonders bevorzugt 2 bis 50, größer ist als die Höhe h2 des zweiten Filterelements F2. Gleichermaßen kann es erfindungsgemäß vorgesehen sein, dass die Höhe h1 des ersten Filterelements F1 um einen Faktor von mindestens 1,1, insbesondere mindestens 1,3, vorzugsweise mindestens 1,5, bevorzugt mindestens 1,8, besonders bevorzugt mindestens 2, größer ist als die Höhe h2 des zweiten Filterelements F2, bezogen auf die Ausdehnung parallel zur Hauptdurchströmungsrichtung.

Insbesondere kann es erfindungsgemäß vorgesehen sein, dass das Verhältnis der Höhe h1 des ersten Filterelements F1 zu der Höhe h2 des zweiten Filterelements F2 [Verhältnis h1 : h2] in einem Bereich von 800 : 1 bis 1,05 : 1, insbesondere 600 : 1 bis 1,1 : 1, vorzugsweise 300 : 1 bis 1,5 : 1, bevorzugt 100 : 1 bis 1,8 : 1, besonders bevorzugt 50 : 1 bis 2 : 1, ganz besonders bevorzugt 20 : 1 bis 2 : 1, liegt, bezogen auf die Ausdehnung parallel zur Hauptdurchströmungsrichtung.

Erfindungsgemäß kann es gleichermaßen vorgesehen sein, dass die jeweiligen Filterelemente F1 als solche voneinander unterschiedliche Ausmaße bzw. Abmessungen aufweisen, insbesondere was die Höhen h2 der jeweiligen ersten Filterelemente F1 anbelangt. Diesbezüglich sollten die entsprechenden Höhen h1 der jeweiligen Filterelemente F1 jedoch größer sein als diejenigen der zweiten Filterelemente F2. Entsprechendes gilt für die Filterelemente F2, bei denen es gleichermaßen vorgesehen sein kann, dass die jeweiligen zweiten Filterelemente F2 voneinander verschiedene Ausmaße bzw. Abmessungen, insbesondere Höhen h2, aufweisen, insbesondere mit der Maßgabe, dass die jeweiligen Höhen h2 der zweiten Filterelemente F2 kleiner sind als die Höhen h1 der ersten Filterelemente F1.

Was die Ausmaße bzw. Abmessungen der jeweiligen Filterelemente F1 bzw. F2 weiterhin anbelangt, so können diese im Allgemeinen in weiten Bereichen variieren: Was die ersten Filterelemente F1 anbelangt, so können diese, unabhängig voneinander, Höhen h1 im Bereich von 1 bis 1.000 mm, insbesondere 5 bis 500 mm, vorzugsweise 7,5 bis 250 mm, bevorzugt 10 bis 200 mm, besonders bevorzugt 15 bis 150 mm, aufweisen.

Was die zweiten Filterelemente F2 anbelangt, so können diese, unabhängig voneinander, Höhen h2 im Bereich von 0,5 mm bis 100 mm, insbesondere 0,75 mm bis 75 mm, vorzugsweise 1 bis 50 mm, bevorzugt 1,5 mm bis 25 mm, besonders bevorzugt 2 mm bis 10 mm, aufweisen. Insbesondere können die zweiten Filterelemente F2 als Flachfiltermedien ausgebildet sein.

Zudem können die Filterelemente F1, F2 jeweils Durchmesser d1, d2 bzw. Kantenlängen (d. h. Breiten und/oder Tiefen) im Bereich von 1 mm bis 150 mm, insbesondere 2 mm bis 100 mm, vorzugsweise 3 mm bis 75 mm, besonders bevorzugt 5 mm bis 25 mm, aufweisen.

Der jeweilige Druckverlust bzw. (Durch-)Strömungswiderstand der Filterelemente F1, F2 kann in nichtbeschränkender Weise über (Material-)Dichte der Filterelemente eingestellt bzw. vorgeben werden:

Was das erfindungsgemäße Filtermedium anbelangt, so ist es erfindungsgemäß bevorzugt, wenn die (Material-)Dichte D1 des ersten Filterelements F1 kleiner bzw. geringer ist als die (Material-)Dichte D2 des zweiten Filterelementes F2. Mit anderen Worten ist es erfindungsgemäß bevorzugt, wenn die Dichte D2 des zweiten Filterelementes F2 größer ist als die Dichte D1 des ersten Filterelements F1. Die Dichte bezieht sich insbesondere auf das entsprechende Filterelement F1, F2 als solches, welches beispielsweise einen Träger umfassen kann, an welchem das Adsorptionsmaterial mit einem Fixiermittel bzw. Klebstoff befestigt bzw. fixiert ist. In diesem Zusammenhang führt eine höhere Dichte im Rahmen der erfindungsgemäßen Konzeption, wie zuvor angeführt, zu einem höheren Druckverlust bzw. (Durch-)Strömungswiderstand des in Rede stehenden Filterelements F1, F2, wohingegen eine geringere Dichte in entsprechender Weise zu einem niedrigeren Druckverlust bzw. (Durch-)Strömungswiderstand des zugrundeliegenden Filterelements F1, F2 führt.

In diesem Zusammenhang kann es erfindungsgemäß vorgesehen sein, dass die Dichte D2 des zweiten Filterelements F2 um einen Faktor im Bereich von 1,01 bis 50, insbesondere 1,05 bis 40, vorzugsweise 1,075 bis 30, bevorzugt im Bereich von 1,1 bis 25, besonders bevorzugt 1,15 bis 20, größer ist als die Dichte D1 des ersten Filterelements F1. Gleichermaßen kann die Dichte D2 des zweiten Filterelements F2 um einen Faktor von mindestens 1,01, insbesondere mindestens 1,05, vorzugsweise mindestens 1,075, bevorzugt mindestens 1,1, besonders bevorzugt mindestens 1,15, größer sein als die Dichte D1 des ersten Filterelements F1. Insbesondere kann die Dichte D2 des zweiten Filterelements F2 um mindestens 1 %, insbesondere mindestens 2,5 %, vorzugsweise mindestens 5 %, bevorzugt mindestens 10 %, besonders bevorzugt mindestens 20 %, ganz besonders bevorzugt mindestens 25 %, größer sein als die Dichte D1 des ersten Filterelements F1, bezogen auf die Dichte D1 des ersten Filterelements F1.

Zudem kann es erfindungsgemäß vorgesehen sein, dass das Verhältnis der Dichte D2 des zweiten Filterelements F2 zu der Dichte D1 des ersten Filterelements F1 [Verhältnis D2 : D1] im Bereich von 10 : 1 bis 1,05 : 1, insbesondere 8 : 1 bis 1,1 : 1, vorzugsweise 6 : 1 bis 1,15 : 1, bevorzugt 5 : 1 bis 1,2 : 1, besonders bevorzugt 3 : 1 bis 1,3 : 1, ganz besonders bevorzugt 2 : 1 bis 1,5 : 1, liegt.

Was das erste Filterelement F1 anbelangt, so kann dies eine Dichte D1 im Bereich von 50 kg/m³ bis 800 kg/m³, insbesondere 100 kg/m³ bis 600 kg/m³, vorzugsweise 150 kg/m³ bis 500 kg/m³, bevorzugt 200 kg/m³ bis 450 kg/m³, besonders bevorzugt 250 kg/m³ bis 350 kg/m³, aufweisen, insbesondere mit der Maßgabe, dass die Dichte D1 des ersten Filterelements F1 kleiner ist als die Dichte D2 des zweiten Filterelements F2.

Was weiterhin das zweite Filterelement F2 anbelangt, so kann dies eine Dichte D2 im Bereich von 100 kg/m³ bis 1.250 kg/m³, insbesondere 150 kg/m³ bis 1.000 kg/m³, vorzugsweise 200 kg/m³ bis 800 kg/m³, bevorzugt 250 kg/m³ bis 600 kg/m³, besonders bevorzugt 350 kg/m³ bis 500 kg/m³, ganz besonders bevorzugt 375 kg/m³ bis 450 kg/m³, aufweisen, insbesondere mit der Maßgabe, dass die Dichte D2 des zweiten Filterelements F2 größer ist als die Dichte D1 des ersten Filterelements F1.

Erfindungsgemäß ist es somit insbesondere vorgesehen, dass das erste Filterelement F1 eine geringere Dichte D1 und/oder - insbesondere mit der geringeren Dichte einhergehend - einen geringeren Druckverlust und/oder einen geringeren (Durch-)Strömungswiderstand als das zweite Filterelement F2 aufweist bzw. dass das zweite Filterelement F2 eine größere Dichte D2 und/oder - insbesondere mit der höheren Dichte einhergehend - einen größeren Druckverlust und/oder einen größeren (Durch-)Strömungswiderstand als das erste Filterelement F1 aufweist.

Der Druckverlust und/oder (Durch-)Strömungswiderstand des zweiten Filterelements F2 sollte um einen Faktor im Bereich von 1,5 bis 300, insbesondere 2 bis 250, vorzugsweise 3 bis 200, bevorzugt im Bereich von 4 bis 150, besonders bevorzugt 5 bis 100, größer sein als der Druckverlust und/oder (Durch-)Strömungswiderstand des ersten Filterelements F1. Zudem sollte der Druckverlust und/oder (Durch-)Strömungswiderstand des zweiten Filterelements F2 um einen Faktor von mindestens 1,5, insbesondere mindestens 2, vorzugsweise mindestens 3, bevorzugt mindestens 4, besonders bevorzugt mindestens 5, größer sein als der Druckverlust und/oder (Durch-)Strömungswiderstand des ersten Filterelements F1.

Insbesondere sollte das Verhältnis des Druckverlusts und/oder (Durch-)Strömungswiderstands des zweiten Filterelements F2 zu dem Druckverlust und/oder (Durch-)Strömungswiderstands des ersten Filterelements F1 im Bereich von 500 : 1 bis 1,5 : 1, insbesondere 400 : 1 bis 1,75 : 1, vorzugsweise 300 : 1 bis 2 : 1, bevorzugt 200 : 1 bis 3 : 1, besonders bevorzugt 150 : 1 bis 4 : 1, ganz besonders bevorzugt 100 : 1 bis 5 : 1, liegen.

Erfindungsgemäß kann es zudem vorgesehen sein, dass das erste Filterelement F1 einen Druckverlust und/oder (Durch-)Strömungswiderstand im Bereich von 0,1 Pa/cm bis 100 Pa/cm, insbesondere 0,25 Pa/cm bis 75 Pa/cm, vorzugsweise 0,5 Pa/cm bis 50 Pa/cm, bevorzugt 0,75 Pa/cm bis 30 Pa/cm, besonders bevorzugt 1 Pa/cm bis 25 Pa/cm, aufweist, insbesondere mit der Maßgabe, dass der Druckverlust und/oder (Durch-)Strömungswiderstand des ersten Filterelements F1 kleiner ist als der Druckverlust und/oder (Durch-)-Strömungswiderstand des zweiten Filterelements F2.

Insbesondere kann es erfindungsgemäß vorgesehen sein, dass das zweite Filterelement F2 einen Druckverlust und/oder (Durch-)Strömungswiderstand im Bereich von 1 Pa/cm bis 250 Pa/cm, insbesondere 2 Pa/cm bis 200 Pa/cm, vorzugsweise 3 Pa/cm bis 150 Pa/cm, bevorzugt 5 Pa/cm bis 125 Pa/cm, besonders bevorzugt 10 Pa/cm bis 100 Pa/cm, aufweist, insbesondere mit der Maßgabe, dass der Druckverlust und/oder (Durch-)Strömungswiderstand des zweiten Filterelements F2 größer ist als der Druckverlust und/oder (Durch-)-Strömungswiderstand des ersten Filterelements F1.

Wie zuvor angeführt, kann der Druckverlust bzw. (Durch-)Strömungswiderstand der in Rede stehenden Filterelemente F1, F2 bzw. des Filtermediums nach der Erfindung in Anlehnung an die DIN EN 14387 bestimmt werden, insbesondere bei einer Strömungsgeschwindigkeit, insbesondere Leerrohrgeschwindigkeit, von 6,4 cm/sec.

Die jeweiligen Druckverluste bzw. Durchströmungswiderstände können, wie zuvor angeführt, durch die jeweiligen Dichten D1, D2 der in Rede stehenden Filterelemente F1, F2 eingestellt werden, wobei die Dichten als solche in nichtbeschränkender Weise durch die Auswahl des Trägers, der Beladungsmenge der Filterelemente F1, F2 mit dem jeweiligen Adsorptionsmaterial sowie der Größe der jeweiligen Partikel des eingesetzten Adsorptionsmaterials eingestellt werden können, was dem Fachmann als solches bekannt ist. Beispielsweise führt eine hohe Beladungsmenge des entsprechenden Trägermaterials, insbesondere des zweiten Trägermaterials F2, mit den Adsorbentien zu einer höheren Dichte D2 und damit zu einem höheren Druckverlust bzw. höheren (Durch-)Strömungswiderstand des so beladenen Filterelements F2. Zudem kann der Druckverlust bzw. der (Durch-)Strömungswiderstand insofern erhöht werden, als bei insbesondere hoher Beladungsmenge kleine Partikel (-durchmesser) der Adsorbentien eingesetzt werden, was zu einer weiteren Erhöhung der Packungsdichte und damit zu der in Rede stehenden Erhöhung des Druckverlustes bzw. des (Durch-)Strömungswiderstandes führt.

In entsprechender Weise können für das erste Filterelement F1 geringere Beladungsmengen und/oder größere Partikel(-durchmesser) des ersten Adsorptionsmaterials bzw. der Adsorbentien eingesetzt werden, um hierdurch geringere Druckverluste bzw. (Durch-)Strömungswiderstände für das erste Filterelement F1 zu erhalten. Auch dies ist dem Fachmann als solches bekannt, so dass der Fachmann jederzeit in der Lage ist, die jeweiligen Maßnahmen so auszuwählen bzw. abzustimmen, dass die angeführten Druckverluste bzw. Durchströmungswiderstände für die jeweiligen Filterelemente F1, F2 erhalten werden.

Was das erfindungsgemäße Filtermedium insgesamt anbelangt, so kann das Filtermedium einen Druckverlust bzw. einen (Durch-)Strömungswiderstand im Bereich von 0,1 Pa/cm bis 500 Pa/cm, insbesondere 0,5 Pa/cm bis 400 Pa/cm, vorzugsweise 1 Pa/cm bis 300 Pa/cm, aufweisen. Das erfindungsgemäße Filtermedium weist somit insgesamt geringe Druckverluste bzw. (Durch-)Strömungswiderstände auf, was anwendungstechnisch von Vorteil ist, insbesondere da im Rahmen des Einsatzes des erfindungsgemäßen Filtermediums bei gleichzeitig hervorragender Aufreinigung des Fluids hohe Mengen bzw. Volumina des aufzureinigenden Fluids durch das Filtermedium geführt werden können. Dies ist beispielsweise im Rahmen des Einsatzes des Filtermediums nach der Erfindung für die ABC-Schutzfilter, beispielsweise für ABC-Schutzmasken, von großem Vorteil, da das erfindungsgemäße Filtermedium das Atmen nicht übermäßig einschränkt bzw. erschwert.

Was die weitere Ausgestaltung des ersten Filterelements F1 anbelangt, so kann es erfindungsgemäß vorgesehen sein, dass das erste Filterelement F1 mindestens ein erstes Trägermaterial aufweist. In diesem Zusammenhang kann es erfindungsgemäß vorgesehen sein, dass das erste Adsorptionsmaterial an dem ersten Trägermaterial fixiert bzw. befestigt, insbesondere mit dem ersten Trägermaterial verklebt ist.

In diesem Zusammenhang sollte das erste Trägermaterial eine dreidimensionale Struktur aufweisen. Diesbezüglich sollte das erste Trägermaterial als vorzugsweise offenporiger Schaumstoff, bevorzugt Polyurethanschaumstoff, besonders bevorzugt retikulierter Polyurethanschaumstoff, ausgebildet sein. Aufgrund der Verwendung von Schaumstoffen ist es erfindungsgemäß möglich, die zuvor angeführten niedrigen Dichten bzw. geringen Druckverluste bzw. Durchströmungswiderstände in Bezug auf das erste Filterelemente F1 zu realisieren. Eine entsprechende Einstellung kann auch über die Porengröße des eingesetzten Trägers, insbesondere Schaumstoffs, erfolgen.

Diesbezüglich sollte der mittlere Porendurchmesser des Schaumstoffs mindestens doppelt so groß, insbesondere mindestens zweieinhalbmal so groß, vorzugsweise mindestens dreimal so groß sein wie der Teilchendurchmesser, insbesondere mittlere Teilchendurchmesser D₅₀ des ersten Adsorptionsmaterials. Auch hierdurch wird ein entsprechend geringer Druckverlust bzw. geringer (Durch-)Strömungswiderstand erreicht.

Zudem sollte in Bezug auf das erste Filterelement F1 die Beladungsmenge des ersten Adsorptionsmaterials im Bereich von 5 bis 90 Gew.-%, insbesondere 10 bis 85 Gew.-%, vorzugsweise 15 bis 80 Gew.-%, besonders bevorzugt 20 bis 75 Gew.-%, bezogen auf das erste Filterelement F1, liegen.

Was das für das erste Filterelement F1 eingesetzte erste Trägermaterial weiterhin anbelangt, so sollte das erste Trägermaterial gasdurchlässig, insbesondere luftdurchlässig, ausgebildet sein. In diesem Zusammenhang sollte das erste Trägermaterial eine Gasdurchlässigkeit, insbesondere Luftdurchlässigkeit, von mindestens 10l•m⁻²•s⁻¹, insbesondere mindestens 30l•m⁻²•s⁻¹, vorzugsweise mindestens 50 l•m⁻²•s⁻¹, besonders bevorzugt mindestens 100 l•m⁻²•s⁻¹, ganz besonders bevorzugt mindestens 500 l•m⁻²•s⁻¹, und/oder bis zu 10.000 l•m⁻²•s⁻¹, insbesondere bis zu bis zu 20.000 l•m⁻²•s⁻¹, bei einem Strömungswiderstand von 127 Pa aufweisen. Zudem sollte das erste Trägermaterial eine höhere Gasdurchlässigkeit, insbesondere Luftdurchlässigkeit, als das zweite Trägermaterial, welches für das zweite Filterelement F2 eingesetzt wird, aufweisen.

Die Herstellung des ersten Filterelements F1 kann in dem Fachmann an sich bekannter Art und Weise erfolgen. So kann das Trägermaterial zunächst mit einem Klebstoff ausgerüstet und überflüssiger Klebstoff gegebenenfalls aus dem Trägermaterial entfernt werden, beispielsweise durch Abquetschen, wobei anschließend die Beladung mit dem Adsorptionsmaterial erfolgen kann. Bezüglich des eingesetzten Klebstoffs kann auch auf nachfolgende Ausführungen verwiesen werden.

Was darüber hinaus das zweite Filterelement F2 anbelangt, so ist es erfindungsgemäß insbesondere vorgesehen, dass das zweite Filterelement F2 mindestens ein zweites Trägermaterial aufweist. In diesem Zusammenhang sollte das zweite Adsorptionsmaterial an dem zweiten Trägermaterial fixiert bzw. befestigt, insbesondere mit dem zweiten Trägermaterial verklebt sein.

Was in diesem Zusammenhang das zweite Trägermaterial als solches anbelangt, so sollte dieses eine zweidimensionale und/oder flächige Struktur aufweisen. Insbesondere sollte das zweite Trägermaterial als Flächengebilde ausgebildet sein. Hierdurch können Filterelemente mit hoher Dichte und somit hohem Druckverlust bzw. (Durch-)Strömungswiderstand bereitgestellt werden.

Was das zweite Trägermaterial weiterhin anbelangt, so sollte dieses ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), sein. Diesbezüglich sollte das zweite Trägermaterial ein Flächengewicht von 5 bis 800 g/m², insbesondere 10 bis 500 g/m², bevorzugt 25 bis 400 g/m², aufweisen.

Darüber hinaus sollte das zweite Trägermaterial ein natürliche Fasern bzw. synthetische Fasern (Chemiefasern) enthaltendes oder hieraus bestehendes textiles Flächengebilde sein. In diesem Zusammenhang können die natürlichen Fasern aus der Gruppe von Wollfasern und Baumwollfasern (CO) ausgewählt sein. Die synthetischen Fasern sollten aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA), insbesondere aromatischen, vorzugsweise flammfesten Polyamiden (z. B. NOMEX•); Polyvinylalkoholen (PVAL); Polyurethanen; Polyvinylestern; (Meth-)Acrylaten; Polymilchsäuren (PLA); Aktivkohle; sowie deren Mischungen ausgewählt sein.

Gemäß einer erfindungsgemäß bevorzugten Ausführungsform umfasst das zweite Filterelement F2 mindestens zwei Lagen bzw. mindestens zwei Einheiten des zweiten Trägermaterials. Diesbezüglich kann es erfindungsgemäß vorgesehen sein, dass das zweite Adsorptionsmaterial zwischen den Lagen bzw. Einheiten des zweiten Trägermaterials angeordnet ist. Gemäß dieser Ausführungsform resultiert somit in Bezug auf das zweite Filterelement F2 gewissermaßen ein sandwichartiger Aufbau, wobei das Adsorptionsmaterial beidseitig von den jeweiligen zweiten Trägermaterialien umgeben ist.

Was das zweite Trägermaterial zudem anbelangt, so sollte dieses gasdurchlässig, insbesondere luftdurchlässig, ausgebildet sein. In diesem Zusammenhang sollte das zweite Trägermaterial eine Gasdurchlässigkeit, insbesondere Luftdurchlässigkeit, von mindestens 5 l•m⁻²•s⁻¹, insbesondere mindestens 20 l•m⁻²•s⁻¹, vorzugsweise mindestens 30 l•m⁻²•s⁻¹, besonders bevorzugt mindestens 80 l•m⁻²•s⁻¹, ganz besonders bevorzugt mindestens 200 l•m⁻²•s⁻¹, und/oder bis zu 8.000 l•m⁻²•s⁻¹, insbesondere bis zu 15.000 l•m⁻²•s⁻¹, bei einem Strömungswiderstand von 127 Pa aufweisen. In diesem Zusammenhang sollte das zweite Trägermaterial eine geringere Gasdurchlässigkeit, insbesondere Luftdurchlässigkeit, als das erste Trägermaterial des ersten Filterelements F1 aufweisen. Auch hierdurch kann in gezielter Weise der Druckverlust bzw. der (Durch-)Strömungswiderstand des zweiten Filterelements F2 gesteuert und insbesondere erhöht werden.

Zudem sollte im Hinblick auf das zweite Filterelement F2 die Beladungsmenge des zweiten Adsorptionsmaterials im Bereich von 10 bis 98 Gew.-%, insbesondere 15 bis 95 Gew.-%, vorzugsweise 20 bis 90 Gew.-%, besonders bevorzugt 30 bis 85 Gew.-%, bezogen auf das zweite Filterelement F2, liegen.

Auch die Herstellung des zweiten Filterelements F2 ist dem Fachmann grundsätzlich bekannt. Insbesondere kann derart verfahren werden, dass ein erstes Trägermaterial, insbesondere in Form eines Vlieses, mit einem Klebstoff belegt wird, wobei der Klebstoffauftrag diskontinuierlich, insbesondere punktförmig oder in Form eines netzartigen Auftrags aufgebracht wird, beispielsweise über sogenannte *Spunbond*-Verfahren oder dergleichen. Anschließend oder gleichzeitig kann das Adsorptionsmaterial aufgebracht werden. Insbesondere kann es erfindungsgemäß vorgesehen sein, dass gewissermaßen mehrere Schichten des Adsorptionsmaterials auf das Trägermaterial aufgebracht werden, beispielsweise durch wiederholte Abfolge von Klebstoffauftrag und Auftrag der Adsorbentien. Abschließend kann ein weiteres Trägermaterial auf die fixierten Adsorbentien aufgebracht werden, so dass die zuvor angeführte sandwichartige Struktur des zweiten Filterelementes F2 resultiert. Bezüglich des eingesetzten Klebstoffs kann auch auf die nachfolgenden Ausführungen verwiesen werden.

In Bezug auf das zweite Filterelement F2 kann jedoch auf das zweite Trägermaterial grundsätzlich auch verzichtet werden. Insbesondere kann es sich bei dem zweiten Filterelement F2 um eine trägerfreie Struktur handeln, welche mittels eines Klebstoffs miteinander verbundene Adsorberpartikel umfasst bzw. hieraus besteht. Insbesondere kann das beispielsweise in Form eines Klebstoffnetzes eingesetzte Bindemittel gleichermaßen eine Matrixbildung, in welcher das Adsorbermaterial eingelagert bzw. fixiert ist. Auf diese Weise ist es insbesondere möglich, die Packungsdichte bzw. Beladungsmenge des zweiten Adsorptionsmaterials und damit die (Material-)Dichte des zweiten Filterelements F2 insgesamt zu erhöhen. Entsprechend resultieren höhere Druckverluste bzw. (Durch-)Strömungswiderstände.

Im Allgemeinen kann die Fixierung bzw. Befestigung, insbesondere die Verklebung, des insbesondere kornförmigen ersten Adsorptionsmaterials mit dem ersten Trägermaterial und/oder des insbesondere kornförmigen zweiten Adsorptionsmaterials mit dem zweiten Trägermaterial, unabhängig voneinander, mittels eines insbesondere hitzklebrigen Klebstoffs, vorzugsweise Schmelzklebstoffs, insbesondere auf Basis eines feuchtigkeitsvernetzenden und/oder wärmevernetzenden, insbesondere reaktiven Schmelzklebers, vorzugsweise auf Polyurethanbasis, erfolgen. In diesem Zusammenhang sollte die äußere Oberfläche des insbesondere kornförmigen ersten Adsorptionsmaterials und/oder des insbesondere kornförmigen zweiten Adsorptionsmaterials, unabhängig voneinander, zu höchstens 50 %, insbesondere zu höchstens 40 %, vorzugsweise zu höchstens 30 %, vorzugsweise zu höchstens 20 %, besonders bevorzugt zu höchstens 10 %, von dem Klebstoff bedeckt sein.

Das erste Adsorptionsmaterial und/oder das zweite Adsorptionsmaterial, unabhängig voneinander, sind erfindungsgemäß aus kornförmiger, vorzugsweise kugelförmiger Aktivkohle gebildet.

Die jeweiligen partikelbildenden Materialien der erfindungsgemäß eingesetzten Adsorptionsmaterialien sind dem Fachmann wohlbekannt, und der Fachmann ist jederzeit in der Lage, die jeweiligen partikelbildenden Materialien im Lichte der Ausrüstung des erfindungsgemäßen Filtermediums mit speziellen Adsorptionseigenschaften sowie der Einstellung spezieller Druckverluste bzw. (Durch-)Strömungswiderstände gemäß den obigen Ausführungen auszuwählen und aufeinander abzustimmen. Erfindungsgemäß verwendbare Aktivkohlen, welche insbesondere auf Basis kugelförmiger Aktivkohle eingesetzt werden können, sind beispielsweise von der Blücher GmbH, Erkrath, Deutschland oder von der Adsor-Tech GmbH, Premnitz, Deutschland, erhältlich. Zudem kann in Bezug auf die erfindungsgemäß einsetzbare mikroporöse Aktivkohle auf die auf die Anmelderin selbst zurückgehende europäische Patentanmeldung EP 1 918 022 A1 sowie auf die parallele US 2008/0107589 A1 verwiesen werden, deren jeweilige Offenbarung hiermit durch Bezugnahme vollumfänglich eingeschlossen ist.

Gemäß einer erfindungsgemäßen Ausführungsform kann es weiterhin vorgesehen sein, dass das erste Adsorptionsmaterial und das zweite Adsorptionsmaterial jeweils zumindest im Wesentlichen identische partikelbildende Materialien, insbesondere wie zuvor definiert, aufweisen oder hieraus bestehen. Beispielsweise kann für das erste und das zweite Adsorptionsmaterial, insbesondere kugelförmige Aktivkohle eingesetzt werden.

Zudem sollten das erste Adsorptionsmaterial und das zweite Adsorptionsmaterial, unabhängig voneinander, Teilchengrößen, insbesondere Teilchendurchmesser, von mindestens 0,001 mm, insbesondere mindestens 0,01 mm, vorzugsweise mindestens 0,1 mm, bevorzugt mindestens 0,2 mm, aufweisen. Erfindungsgemäß kann es zudem vorgesehen sein, dass das erste Adsorptionsmaterial und das zweite Adsorptionsmaterial, unabhängig voneinander, Teilchengrößen, insbesondere Teilchendurchmesser, im Bereich von 0,001 mm bis 5 mm, insbesondere 0,01 mm bis 3 mm, vorzugsweise 0,2 mm bis 2 mm, bevorzugt 0,2 mm bis 1,5 mm, besonders bevorzugt 0,3 mm bis 1 mm, aufweisen.

Des Weiteren sollten das erste Adsorptionsmaterial und das zweite Adsorptionsmaterial, unabhängig voneinander, eine mittlere Teilchengröße, insbesondere einen mittleren Teilchendurchmesser D₅₀, von mindestens 0,01 mm, insbesondere mindestens 0,05 mm, vorzugsweise mindestens 0,1 mm, bevorzugt mindestens 0,2 mm, besonders bevorzugt mindestens 0,3 mm, aufweisen.

Gleichermaßen können das erste Adsorptionsmaterial und das zweite Adsorptionsmaterial, unabhängig voneinander, eine mittlere Teilchengröße, insbesondere einen mittleren Teilchendurchmesser D₅₀, im Bereich von 0,01 mm bis 4 mm, insbesondere 0,05 mm bis 2 mm, vorzugsweise 0,1 mm bis 1,5 mm, bevorzugt 0,2 mm bis 1,2 mm, besonders bevorzugt 0,3 mm bis 1 mm, aufweisen.

Die entsprechenden Teilchengrößen bzw. Durchmesser können beispielsweise auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Weiterhin kann es gemäß der erfindungsgemäßen Konzeption vorgesehen sein, dass das erste Adsorptionsmaterial und das zweite Adsorptionsmaterial, unabhängig voneinander, eine spezifische Oberfläche (BET-Oberfläche) von mindestens 250 m²/g, insbesondere mindestens 500 m²/g, vorzugsweise mindestens 750 m²/g, besonders bevorzugt mindestens 1.000 m²/g, aufweisen. Gleichermaßen kann es vorgesehen sein, dass das erste partikuläre Adsorptionsmaterial und/oder das zweite partikuläre Adsorptionsmaterial, unabhängig voneinander, eine spezifische Oberfläche (BET-Oberfläche) im Bereich von 300 m²/g bis 4.000 m²/g, insbesondere 400 m²/g bis 3.000 m²/g, vorzugsweise 500 m²/g bis 2.500 m²/g, besonders bevorzugt 600 m²/g bis 2.000 m²/g, aufweisen.

Die Bestimmung der spezifischen Oberfläche gemäß BET ist dem Fachmann grundsätzlich bekannt. Alle BET-Oberflächenangaben beziehen sich auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet.

Typischerweise können das erste Adsorptionsmaterial und das zweite Adsorptionsmaterial, unabhängig voneinander, ein Adsorptionsvolumen V_{ads} von mindestens 250 cm³/g, insbesondere mindestens 300 cm³/g, vorzugsweise mindestens 325 cm³/g, besonders bevorzugt mindestens 350 cm³/g, aufweisen. In diesem Zusammenhang können das erste Adsorptionsmaterial und das zweite Adsorptionsmaterial, unabhängig voneinander, ein Adsorptionsvolumen V_{ads} im Bereich von 250 cm³/g bis 3.000 cm³/g, insbesondere 300 cm³/g bis 2.000 cm³/g, vorzugsweise 350 cm³/g bis 2.500 cm³/g, aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt. Insbesondere handelt es sich bei dem Adsorptionsvolumen V_{ads} um das gewichtsbezogene adsorbierte N₂-Volumen, welches im Allgemeinen bei einem Partialdruck p/p₀ von 0,995 bestimmt wird.

Weiterhin können das erste Adsorptionsmaterial und das zweite Adsorptionsmaterial, unabhängig voneinander, ein Gesamtporenvolumen nach Gurvich von mindestens 0,2 cm³/g, insbesondere mindestens 0,3 cm³/g, vorzugsweise mindestens 0,4 cm³/g, besonders bevorzugt mindestens 0,6 cm³/g, aufweisen. Insbesondere können das erste Adsorptionsmaterial und das zweite Adsorptionsmaterial, unabhängig voneinander, ein Gesamtporenvolumen nach Gurvich im Bereich von 0,2 cm³/g bis 2,0 cm³/g, insbesondere 0,3 cm³/g bis 1,5 cm³/g, vorzugsweise 0,4 cm³/g bis 1,2 cm³/g, besonders bevorzugt 0,5 cm³/g bis 1,0 cm³/g, aufweisen.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Insbesondere kann es im Rahmen der vorliegenden Erfindung vorgesehen sein, dass das erste Adsorptionsmaterial und das zweite Adsorptionsmaterial, unabhängig voneinander, ein durch Poren mit Porendurchmessern ≤ 2 nm gebildetes Porenvolumen, insbesondere Mikroporenvolumen nach Carbon Black, im Bereich von 0,1 cm³/g bis 2 cm³/g, insbesondere 0,2 cm³/g bis 1,5 cm³/g, vorzugsweise 0,3 cm³/g bis 1,1 cm³/g, besonders bevorzugt 0,4 cm³/g bis 1 cm³/g, aufweisen. Insbesondere können 20 % bis 95 %, insbesondere 30 % bis 95 %, vorzugsweise 40 % bis 90 %, des Gesamtporenvolumens des ersten Adsorptionsmaterials und/oder des zweiten Adsorptionsmaterial durch Poren mit Porendurchmessern von ≤ 2 nm, insbesondere durch Mikroporen, gebildet sein.

Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Erfindungsgemäß ist es gleichermaßen von Vorteil, wenn das erste Adsorptionsmaterial und das zweite Adsorptionsmaterial, unabhängig voneinander, einen mittleren Porendurchmesser im Bereich von 1 nm bis 60 nm, insbesondere 1 nm bis 55 nm, bevorzugt 1,5 nm bis 50 nm, besonders bevorzugt 2 nm bis 45 nm, aufweisen. Hierdurch können die Adsorptionseigenschaften weiter verbessert werden. Die Bestimmung des mittleren Porendurchmessers kann insbesondere auf Basis der jeweiligen Stickstoffsorptionsisothermen erfolgen.

Die erfindungsgemäß eingesetzten Adsorbentien auf Basis des ersten Adsorptionsmaterials und des zweiten Adsorptionsmaterials können, unabhängig voneinander, eine Schüttdichte im Bereich von 200 g/l bis 1.000 g/l, insbesondere 300 g/l bis 900 g/l, vorzugsweise 400 g/l bis 800 g/l, bevorzugt 500 g/l bis 750 g/l, aufweisen. Die Schüttdichte kann insbesondere nach ASTM B527-93/00 bestimmt werden.

Gleichermaßen kann es erfindungsgemäß vorgesehen sein, dass das erste Adsorptionsmaterial und das zweite Adsorptionsmaterial, unabhängig voneinander, eine Iodzahl im Bereich von 500 mg/g bis 2.000 mg/g, insbesondere 600 mg/g bis 1.800 mg/g, vorzugsweise 800 mg/g bis 1.600 mg/g, aufweisen. Die Iodzahl kann insbesondere nach ASTM D4607-94/04 bestimmt werden.

Erfindungsgemäß kann es zudem vorgesehen sein, dass das eingesetzte erste Adsorptionsmaterial und/oder das zweite Adsorptionsmaterial, unabhängig voneinander, mit mindestens einer katalytisch aktiven Substanz bzw. mit mindestens einem Katalysator ausgerüstet bzw. imprägniert sind. In diesem Zusammenhang kann der Katalysator bzw. die katalytisch aktive Substanz beispielsweise ausgewählt sein aus Metallen und Metallverbindungen (z. B. von Übergangsmetallen, insbesondere Edelmetallen). Vorzugsweise ist der Katalysator ausgewählt aus der Gruppe von Kupfer, Cadmium, Silber, Platin, Palladium, Zink und Quecksilber sowie deren Verbindungen. Die Menge an Katalysator, bezogen auf das imprägnierte Adsorptionsmaterial, kann dabei in weiten Grenzen variieren. Im Allgemeinen liegt die Menge an Katalysator, bezogen auf das imprägnierte Adsorptionsmaterial, im Bereich von 0,01 Gew.-% bis 15 Gew.-%, insbesondere 0,05 Gew.-% bis 12 Gew.-%, vorzugsweise 5 Gew.-% bis 12 Gew.-%. Die Imprägnierung der erfindungsgemäß eingesetzten Adsorptionsmaterialien ist aus dem Stand der Technik bekannt. Für weitere Einzelheiten kann beispielsweise verwiesen werden auf die H. v. Kienle, E. Bäder "Aktivkohle und ihre industrielle Anwendung", Ferdinand Enke Verlag, Stuttgart, 1980, sowie auf die DE 195 19 869 A1, deren gesamter Offenbarungsgehalt hiermit vollumfänglich eingeschlossen ist. Insbesondere kann es sich bei der Imprägnierung um eine sogenannte ASZM-TEDA-Imprägnierung handeln. Beispielsweise können in diesem Zusammenhang als Imprägniermittel Zinkoxid, Triethyldiamin und/oder Silber eingesetzt werden. Durch die Imprägnierung kann das eingesetzte Adsorptionsmaterial somit gleichermaßen über physiosorptive und chemiesorptive Eigenschaften verfügen, was zu einer weiteren Steigerung der Leistungsfähigkeit des erfindungsgemäßen Filtermediums führt.

Gemäß der vorliegenden Erfindung kann es zudem vorgesehen sein, dass sich das erste Adsorptionsmaterial und das zweite Adsorptionsmaterial in mindestens einem physikalischen und/oder chemischen Parameter voneinander unterscheiden. Insbesondere kann der physikalische und/oder chemische Parameter ausgewählt sein aus der Gruppe von (i) Teilchengröße, insbesondere mittlerer Teilchengröße und/oder Teilchendurchmesser, insbesondere mittlerer Teilchendurchmesser; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittlerem Porendurchmesser; (v) Imprägnierung und/oder katalytischer Ausrüstung sowie (vi) Teilchenform, vorzugsweise Teilchengröße, insbesondere mittlerer Teilchengröße und/oder Teilchendurchmesser, insbesondere mittlerer Teilcheridurchmesser. Gleichermaßen können die jeweiligen ersten Filterelemente F1 untereinander bzw. die jeweiligen Filterelemente F2 untereinander voneinander verschiedene Parameter hinsichtlich des jeweils eingesetzten Adsorptionsmaterials aufweisen.

In diesem Zusammenhang ist es von Vorteil, wenn das erste Adsorptionsmaterial und das zweite Adsorptionsmaterial unterschiedliche Teilchengrößen, insbesondere unterschiedliche mittlere Teilchengrößen und/oder Teilchendurchmesser, insbesondere unterschiedliche mittlere Teilchendurchmesser, aufweisen. In diesem Zusammenhang kann es vorgesehen sein, dass das erste Adsorptionsmaterial im Vergleich zu dem zweiten Adsorptionsmaterial eine größere Teilchengröße, insbesondere eine größere mittlere Teilchengröße und/oder einen größeren Teilchendurchmesser, insbesondere einen größeren mittleren Teilchendurchmesser D₅₀, aufweist. Gleichermaßen kann es vorgesehen sein, dass das zweite Adsorptionsmaterial im Vergleich zu dem ersten Adsorptionsmaterial eine kleinere Teilchengröße, insbesondere eine kleinere mittlere Teilchengröße und/oder einen kleineren Teilchendurchmesser, insbesondere einen kleineren mittleren Teilchendurchmesser D₅₀, aufweist. Durch diese erfindungsgemäße Maßnahme kann, wie zuvor angeführt und insbesondere im Zusammenhang mit der Beladungsdichte der jeweiligen Filterelemente F1, F2 mit dem Adsorptionsmaterial, die (Material-)Dichte und somit der Druckverlust bzw. der (Durch-)Strömungswiderstand der in Rede stehenden Filterelemente F1, F2 eingestellt werden, insbesondere mit der Maßgabe, dass das zweite Filterelement F2 einen größeren Druckverlust bzw. (Durch-)Strömungswiderstand aufweist als das erste Filterelement F1.

Insbesondere kann es vorgesehen sein, dass die Teilchengrößen, insbesondere die Teilchendurchmesser, insbesondere die mittleren Teilchendurchmesser D₅₀, des ersten Adsorptionsmaterials einerseits und des zweiten Adsorptionsmaterials andererseits um mindestens einen Faktor 1,1, insbesondere mindestens einen Faktor 1,25, vorzugsweise mindestens einen Faktor 1,5, bevorzugt mindestens einen Faktor 2, besonders bevorzugt mindestens einen Faktor 5, ganz besonders bevorzugt mindestens einen Faktor 10, jeweils bezogen auf den kleineren Teilchengrößenwert, voneinander verschieden sind. Zudem kann es erfindungsgemäß vorgesehen sein, dass die Teilchengrößen, insbesondere die Teilchendurchmesser, insbesondere die mittleren Teilchendurchmesser D₅₀, des ersten Adsorptionsmaterials einerseits und des zweiten Adsorptionsmaterials andererseits um mindestens 0,001 mm, insbesondere um mindestens 0,01 mm, vorzugsweise um mindestens 0,05 mm, bevorzugt um mindestens 0,1 mm, voneinander verschieden sind.

Die vorgenannten Werteangaben für die Teilchengröße werden insbesondere mit der Maßgabe eingestellt, dass das erste Adsorptionsmaterial die größeren Werte hinsichtlich der Teilchengröße aufweist bzw. insbesondere mit der Maßgabe, dass das zweite Adsorptionsmaterial die diesbezüglich kleineren Werte aufweist.

Erfindungsgemäß können die jeweiligen ersten Filterelemente F1 untereinander bzw. die jeweiligen zweiten Filterelemente F2 untereinander voneinander verschiedene Eigenschaften bzw. Parameter aufweisen, beispielsweise unterschiedliche Druckverluste bzw. (Durch-)Strömungswiderstände, (Material-)-Dichten, Trägermaterialien, Beladungsmengen des Adsorptionsmaterials, Adsorptionsmaterialien als solche, Filterelementhöhen und dergleichen, insbesondere jedoch mit der Maßgabe, dass die ersten Filterelemente F1 kleinere Druckverluste bzw. kleinere (Durch-)Strömungswiderstände als die zweiten Filterelemente F2 bzw. dass die zweiten Filterelemente F2 größere Druckverluste bzw. größere (Durch-)Strömungswiderstände als die ersten Filterelemente F1 aufweisen. Beispielsweise können die einen Block B1 ausbildenden ersten Filterelemente F1 bzw. die einen zweiten Block B2 ausbildenden zweiten Filterelemente F2 innerhalb der jeweiligen Blöcke unterschiedliche Eigenschaften bzw. Parameter aufweisen, insbesondere wie zuvor definiert.

Gemäß einer weiteren erfindungsgemäßen Ausführungsform kann es zudem vorgesehen sein, dass das Filtermedium darüber hinaus und in Ergänzung zu den Filterelementen F1, F2 mindestens eine Partikel- und/oder Aerosolfilterschicht aufweist. In diesem Zusammenhang ist es bevorzugt, wenn die Partikel- und/oder Aerosolfilterschicht stromaufwärts zu den Filterelementen F1, F2 positioniert und/oder angeordnet ist. Insbesondere ist es von Vorteil, wenn die Partikel- und/oder Aerosolfilterschicht den Filterelementen F1, F2 stromaufwärts vorgeschaltet ist.

Was die Partikel- und/oder Aerosolfilterschicht weiterhin anbelangt, so kann es erfindungsgemäß vorgesehen sein, dass diese als ein aus Fasern mit Faserdurchmessern im Bereich von 10 nm bis 5 µm, bevorzugt 100 nm bis 1,1 µm, gebildetes luftdurchlässiges textiles Flächengebilde, vorzugsweise mit einem Flächengewicht im Bereich von 1 bis 75 g/m², insbesondere 2 bis 50 g/m², besonders bevorzugt 5 bis 15 g/m², ausgebildet ist.

Gleichermaßen kann die Partikel- und/oder Aerosolfilterschicht als ein Gelege oder Textilverbundstoff, insbesondere als ein Vlies (Non-Woven), ausgebildet sein.

Insbesondere kann die Partikel- und/oder Aerosolfilterschicht ein aus Textilfasern bestehendes textiles Flächengebilde mit durch die Textilfasern begrenzten Poren oder Maschen sein, wobei das textile Flächengebilde eine mittlere Porengröße oder mittlere Maschenweite von höchstens 200 µm, insbesondere höchstens 100 µm, vorzugsweise höchstens 75 µm, besonders bevorzugt höchstens 50 µm, ganz besonders bevorzugt höchstens 40 µm, noch mehr bevorzugt höchstens 10 µm, aufweist.

In diesem Zusammenhang kann die Partikel- bzw. Aerosolfilterschicht eine Dicke im Bereich von 0,001 bis 10 mm, insbesondere 0,01 bis 5 mm, vorzugsweise 0,01 bis 1 mm, aufweisen.

Insbesondere kann die Partikel- bzw. Aerosolfilterschicht als ein HEPA-Filter (*High Efficiency Penetration* oder *Particulate Air*) oder ULPA-Filter (*Ultra Low Penetration* oder *Particulate Air*) ausgebildet sein.

Der zusätzliche Einsatz einer Partikel- bzw. Aerosolfilterschicht führt zu einer weiteren Effizienzsteigerung des erfindungsgemäßen Filtermediums, insbesondere da Aerosole bzw. Partikel aus dem aufzureinigenden Fluid, insbesondere Gas bzw. Gasgemisch, vorzugsweise Luft, insbesondere vor Eintritt in die jeweiligen Filterelemente F1, F2 entfernt werden, was zu einer weiteren Entlastung der nachgeschalteten Filterelemente F1, F2 des erfindungsgemäßen Filtermediums führt.

Das erfindungsgemäße Filtermedium kann zudem gezielt mit einer Ionenaustauscherschicht ausgerüstet werden, welche grundsätzlich an beliebiger Stelle innerhalb des erfindungsgemäßen Filtermediums angeordnet werden kann. Insbesondere kann die in Rede stehende Ionenaustauscherschicht stromabwärts als zuerst positioniertes und/oder als zuletzt positioniertes Element eingesetzt werden. Die Ionenaustauscherschicht kann beispielsweise gleichermaßen ein Trägermaterial, insbesondere ein Schaumstoffmaterial, beispielsweise wie zuvor für das erste Filterelement F1 definiert, aufweisen. Die Ionenaustauscherschicht kann insbesondere dem Fachmann an sich bekannte Ionenaustauscher, wie Kationenaustauscher enthalten, welche an dem Träger fixiert sein können. Insbesondere können die zuvor unter (v) für die Adsorptionsmaterialien genannten Ionenaustauscherharze eingesetzt werden. Durch die Verwendung eines zusätzlichen Ionenaustauschers kann eine weiterführende Verbesserung der Filtereffizienz insbesondere in Bezug auf Schad- bzw. Giftstoffe, wie Cyclohexan und/oder Ammoniak, erreicht werden.

Im Folgenden wird die vorliegende Erfindung anhand bevorzugter Ausführungsbeispiele sowie Vergleichsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:
- Fig. 1: eine schematische Schnittdarstellung des erfindungsgemäßen Filtermediums FM entlang der Hauptdurchströmungsrichtung R mit dem aufzureinigenden Fluid, insbesondere Gas bzw. Gasgemisch, wobei das Filtermedium FM in alternierender Abfolge jeweils ein erstes Filterelement F1 und jeweils ein zweites Filterelement F2 aufweist; zudem sind jeweilige Ausschnittsvergrößerungen zu den Filterelementen F1, F2 angegeben; das Filtermedium FM gemäß dieser Ausführungsform weist zudem eine in Hauptdurchströmungsrichtung R stromaufwärts vorgeschaltete Partikel- bzw. Aerosolfilterschicht auf;
- Fig. 2A bis 2C: schematische Schnittdarstellungen erfindungsgemäßer Filtermedien FM entlang zur Hauptdurchströmungsrichtung R mit variabler Anzahl und Anordnung der jeweiligen ersten Filterelemente F1 und der jeweiligen zweiten Filterelemente F2;
- Fig. 3A bis 3E: schematische Schnittdarstellungen weiterer erfindungsgemäßer Filtermedien FM entlang der Hauptdurchströmungsrichtung R mit variabler Anordnung und Anzahl der jeweiligen Filterelemente F1 sowie der jeweiligen Filterelemente F2;
- Fig. 4A und 4B: Schnittdarstellungen von Vergleichsfiltermedien FM' bzw. FM'" entlang zur Hauptdurchströmungsrichtung R, wobei die jeweiligen Filterelemente FM ausschließlich das zweite Filterelement F2 in jeweils unterschiedlicher Anzahl aufweisen;
- Fig. 4C: eine schematische Schnittdarstellung eines erfindungsgemäßen Filtermediums FM entlang der Hauptdurchströmungsrichtung R, wobei das Filtermedium FM eine alternierende Abfolge von ersten Filterelementen F1 und zweiten Filterelementen F2 aufweist;
- Fig. 4D: eine schematische Schnittdarstellung eines weiteren erfindungsgemäßen Filtermediums FM entlang der Hauptdurchströmungsrichtung R mit der dort spezifizierten Anzahl und Abfolge der ersten Filterelemente F1 und der zweiten Filterelemente F2, wobei die ersten Filterelemente F1 jeweils einen zur Erhöhung der Dichte des ersten Filterelements F1 leicht komprimierten Schaumstoff als Trägerstruktur für das Adsorptionsmaterial aufweisen, wobei die Dichte der ersten Filterelemente F1 jedoch geringer ist als die Dichte der jeweiligen zweiten Filterelemente F2;
- Fig. 5: graphische Darstellungen des Durchbruchverhaltens bzw. der Durchbruchzeiten von erfindungsgemäßen Filtermedien FM (Filtermedien C bzw. D) im Vergleich zu nichterfindungsgemäßen Filtermedien (Filtermedien A, B).

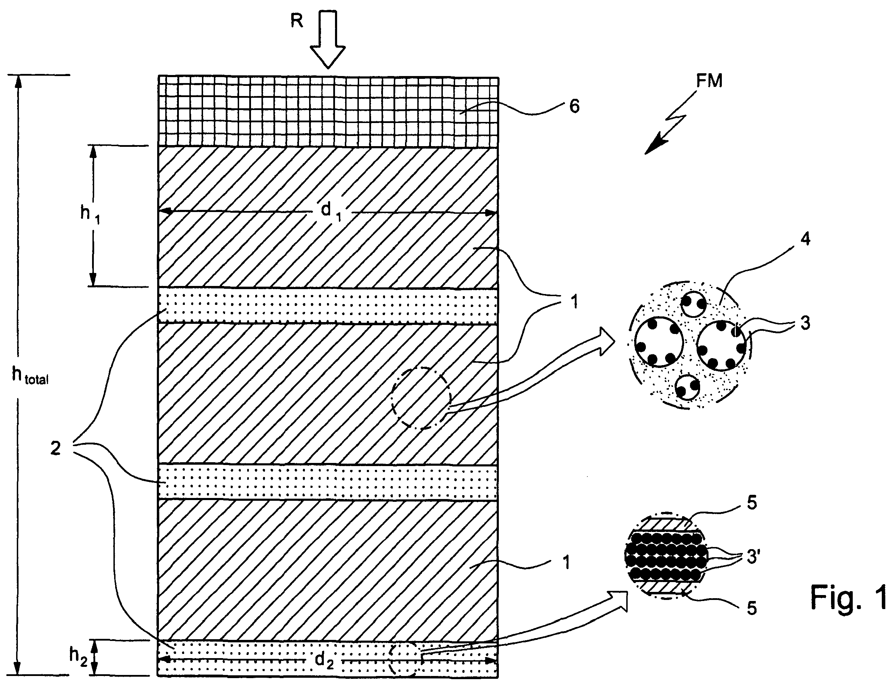

Fig. 1 zeigt somit ein adsorptives Filtermedium FM (synonym auch als Filtereinheit bzw. Filterstruktur bezeichnet), insbesondere zur Aufreinigung von Gasen bzw. Gasgemischen, vorzugsweise Luft, und/oder insbesondere zur Entfernung von chemischen bzw. biologischen Giften bzw. Schadstoffen aus Gasen und/oder Gasgemischen, vorzugsweise Luft. Das erfindungsgemäße Filtermedium FM weist dabei eine Mehrzahl eines ersten Filterelements F1 bzw. 1 mit einem ersten Adsorptionsmaterial 3, insbesondere in Form von Adsorbenspartikeln, und eine Mehrzahl eines von dem ersten Filterelement F1 bzw. 1 verschiedenen zweiten Filterelements F2 bzw. 2 mit einem zweiten Adsorptionsmaterial 3', insbesondere in Form von Adsorbenspartikeln, auf. Das erste Filterelement F1 bzw. 1 und das zweite Filterelement F2 bzw. 2 weisen dabei voneinander verschiedene Druckverluste bzw. (Durch-)Strömungswiderstände auf.

Die Figurendarstellung gemäß Fig. 1 zeigt dabei einen schematischen Aufbau des erfindungsgemäßen Filtermediums FM, wobei die Filterelemente F1 bzw. 1 eine geringere Dichte bzw. einen geringeren Beladungsgrad mit dem Adsorptionsmaterial 3 und damit einhergehend einen geringeren Druckverlust bzw. (Durch-)Strömungswiderstand als die entsprechenden Filterelemente F2 bzw. 2 aufweisen, welche insbesondere nach Art eines Flachmediums mit höherer Dichte bzw. höherem Beladungsgrad mit dem zweiten Adsorptionsmaterial 3' und somit mit höherem Druckverlust bzw. höherem (Durch-)Strömungswiderstand ausgebildet sind (vgl. Ausschnittsvergrößerungen gemäß Fig. 1).

Wie Fig. 1 insbesondere auf Basis der zugrundeliegenden Ausschnittsvergrößerungen weiterhin zu entnehmen ist, weisen die Filterelemente F1 bzw. 1 einen porösen Träger 4, insbesondere einen offenporigen Schaumstoff auf, in dessen Poren das erste Adsorptionsmaterial 3 in Form partikulärer Adsorbentien befestigt bzw. fixiert ist. Demgegenüber sind die Filterelemente F2 bzw. 2 als Flachmedien ausgebildet, wobei das zweite Adsorptionsmaterial 3' in Form partikulärer Adsorbentien auf einem zweiten Trägermaterial 5 in Form eines Vlieses fixiert ist. Für die Filterelemente F2 bzw. 2 ist dabei ein sandwichartiger Aufbau realisiert, wobei das zweite Adsorptionsmaterial 3' beidseitig von jeweiligen Schichten bzw. Lagen des zweiten Trägermaterials 5 begrenzt ist und zwischen den jeweiligen Schichten bzw. Lagen des Trägermaterials 5 angeordnet ist. Aufgrund des speziellen Aufbaus der Filterelemente F2 bzw. 2 resultieren für diese im Vergleich zu den ersten Filterelemente F1 bzw. 1 entsprechend höhere Druckverluste bzw. höhere (Durch-)Strömungswiderstände.

Wie Fig. 1 darüber hinaus zu entnehmen ist, weisen die zweiten Filterelemente F2 bzw. 2 geringere Höhen h2 als die jeweiligen ersten Filterelemente F1 bzw. 1 mit entsprechenden Höhen h1 auf. Das erfindungsgemäße Filtermedium FM gemäß Fig. 1 ist dabei derart aufgebaut, dass die jeweiligen ersten Filterelemente F1 bzw. 1 und die jeweiligen zweiten Filterelemente F2 bzw. 2 abwechselnd bzw. alternierend in dem erfindungsgemäßen Filtermedium FM angeordnet sind, wobei stromabwärts als letztes Element ein zweites Filterelement F2 bzw. 2 und stromaufwärts als zuerst positioniertes Filterelement ein erstes Filterelement F1 bzw. 1 angeordnet ist. In Hauptdurchströmungsrichtung R ist somit zuerst ein erstes Filterelement F1 bzw. 1 und zuletzt ein zweites Filterelement F2 bzw. 2 innerhalb des erfindungsgemäßen Filtermediums FM angeordnet.

Das Filtermedium FM gemäß Fig. 1 weist zudem eine in Hauptdurchströmungsrichtung R den Filterelementen F1 bzw. 1 sowie F2 bzw. 2 vorgeschaltete Partikel- bzw. Aerosolfilterschicht 6 auf, wodurch die Einsatz- bzw.

Standzeit des Filtermediums FM nach der Erfindung weiter verlängert werden kann, insbesondere da ein Zusetzen der nachfolgenden Filterelemente F1, F2 mit aerosol- bzw. partikelförmigen Substanzen aus dem Fluid vermieden bzw. verringert wird. Wie der Figurendarstellung gemäß Fig. 1 noch zu entnehmen ist, weisen die ersten Filterelemente F1 bzw. 1 sowie die zweiten Filterelemente F2 bzw. 2 zumindest im Wesentlichen identische Durchmesser d1 bzw. d2 auf. Das Filtermedium FM nach der Erfindung auf Basis der jeweiligen ersten und zweiten Filterelemente F1 bzw. 1 sowie F2 bzw. 2 sowie mit der Partikel- bzw. Aerosolfilterschicht 6 weist eine resultierende Gesamthöhe hₜₒₜₐₗ auf, wie in Fig. 1 dargestellt.

Wie zuvor beschrieben, umfasst das erfindungsgemäße Filtermedium FM somit Filterelemente auf Basis von ersten Filterelementen F1 bzw. 1 und zweiten Filterelementen F2 bzw. 2, welche sowohl in Bezug auf die Anzahl als auch die Anordnung innerhalb des erfindungsgemäßen Filtermediums FM variieren können. Es resultieren somit erfindungsgemäße Strukturen mit variierendem bzw. maßgeschneidertem Aufbau, welche insbesondere im Hinblick auf die Hauptdurchströmungsrichtung R insbesondere alternierende und/oder periodische Dichteunterschiede aufweisen, was durch die Abfolge und konkrete Auswahl der jeweiligen ersten bzw. zweiten Filterelemente F1 bzw. F2 gezielt eingestellt bzw. vorgegeben werden kann. Es resultieren somit gemäß dieser in Fig. 1 dargestellten Ausführungsform der vorliegenden Erfindung erfindungsgemäße Filtermedien FM mit periodischen Dichteunterschieden, welche innerhalb des Filtermediums FM Bereiche niedriger Dichte und Bereiche hoher Dichte in spezieller Abfolge aufweisen. In diesem Zusammenhang hat es sich erfindungsgemäß als besonders vorteilhaft erwiesen hat, wenn Filterelemente mit höherer Dichte bzw. höherem Druckverlust bzw. höherem (Durch-)Strömungswiderstand, insbesondere die zweiten Filterelemente F2 bzw. 2, stromabwärts zu Filterelementen mit im Vergleich hierzu niedrigerer Dichte bzw. niedrigerem Druckverlust bzw. niedrigerem (Durch-)-Strömungswiderstand, insbesondere stromabwärts zu den ersten Filterelementen F1 bzw. 1, angeordnet sind.

Als besonders vorteilhaft hat es sich zudem erwiesen, wenn das erfindungsgemäße Filtermedium FM stromabwärts als letztes Filterelement mindestens ein Filterelement F2 bzw. 2 mit im Vergleich zu den stromaufwärts hierzu vorgelagerten Filterelementen höheren Dichten bzw. höherem Druckverlust bzw. höherem (Durch-)Strömungswiderstand aufweist.

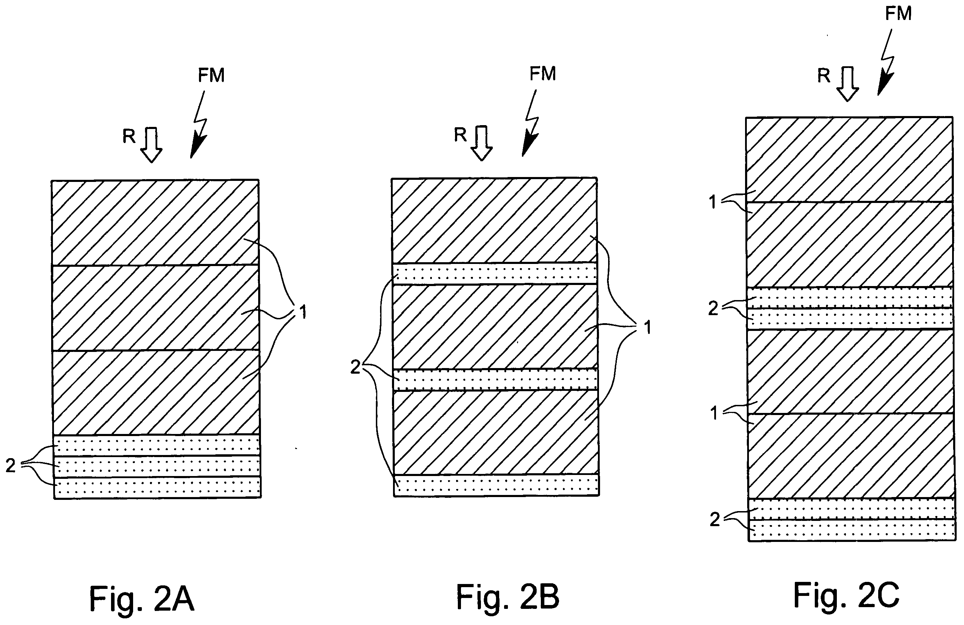

Fig. 2A zeigt eine blockweise Anordnung auf Basis von jeweils drei Filterelementen F1 bzw. 1 sowie F2 bzw. 2, wobei der erste Block aus drei ersten Filterelementen F1 bzw. 1 in Hauptdurchströmungsrichtung R einem zweiten Block aus drei Filterelementen F2 bzw. 2 vorgeschaltet ist. In diesem Zusammenhang zeigt Fig. 2B eine weitere, periodische Anordnung der dem erfindungsgemäßen Filtermedium FM zugrundeliegenden Filterelemente F1 bzw. 1 sowie F2 bzw. 2, wonach nämlich eine alternierende bzw. periodische Anordnung einzelner Filterelemente F1 bzw. 1 sowie F2 bzw. 2 vorliegt. Schließlich zeigt Fig. 2C ein weiteres erfindungsgemäßes Filtermedium FM mit einer periodisch blockweisen Anordnung der dem erfindungsgemäßen Filtermedium zugrundeliegenden Filterelemente F1 bzw. 1 sowie F2 bzw. 2, wonach nämlich in alternierender Reihenfolge insgesamt vier Blöcke in der Reihenfolge auf Basis jeweils eines Blocks aus zwei ersten Filterelementen F1 bzw. 1 sowie jeweils eines Blocks aus zwei zweiten Filterelementen F2 bzw. 2 alternierend angeordnet sind.

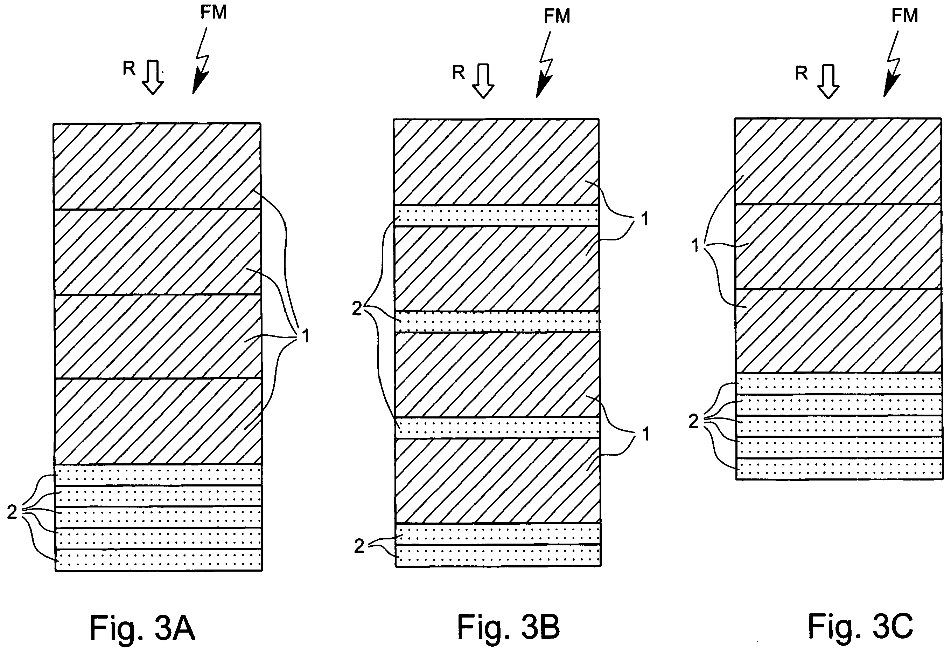

Für weitere erfindungsgemäße Anordnungsmöglichkeiten der dem erfindungsgemäßen Filtermedium FM zugrundeliegenden Filterelemente F1 bzw. 1 sowie F2 bzw. 2 kann auf die in Rede stehenden Figurendarstellungen gemäß Fig. 3A bis Fig. 3E verwiesen werden.

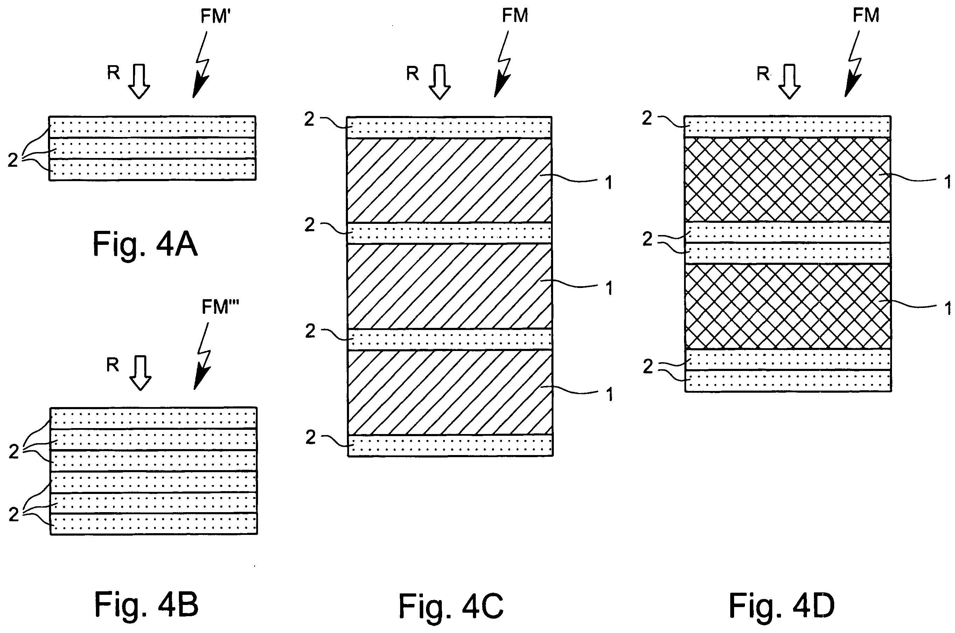

Gleichermaßen zeigen die Figurendarstellungen gemäß Fig. 4C sowie Fig. 4D erfindungsgemäße adsorptive Filtermedien FM mit einer alternierenden Anordnung der Filterelemente F1 bzw. 1 sowie F2 bzw. 2, wobei in Fig. 4C (Filtermedium C) eine alternierende Abfolge auf Basis jeweils eines einzelnen ersten Filterelements F1 bzw. 1 sowie eines einzelnen zweiten Filterelements F2 bzw. 2 realisiert ist, während in Fig. 4D (Filtermedium D) eine periodische Anordnung auf Basis eines einzelnen Filterelements F1 bzw. 1, gefolgt von einem Block aus zwei zweiten Filterelementen F2 bzw. 2 realisiert ist. Den Anordnungen bzw. Filtermedien FM gemäß Fig. 4C und Fig. 4D ist gemein, dass stromabwärts als letztes Element bzw. als letzte Filterelemente mindestens ein zweites Filterelement F2 bzw. 2, d. h. ein Filterelement mit im Vergleich zu den Filterelementen F1 bzw. 1 höherer Dichte bzw. höherem Druckverlust bzw. höherem (Durch-)Strömungswiderstand positioniert bzw. angeordnet ist. Hierdurch kann - ohne sich auf diese Theorie beschränken zu wollen - eine gewisse Vergleichmäßigung des durch das erfindungsgemäße Filtermedium FM strömenden Fluids, insbesondere Gas bzw. Gasgemisches, vorzugsweise Luft, erreicht werden, was zu einer längeren Verweilzeit des aufzureinigenden Fluids insbesondere in den Filterelementen F2 bzw. 2 führt, um so die Adsorptionseffizienz zu verbessern.

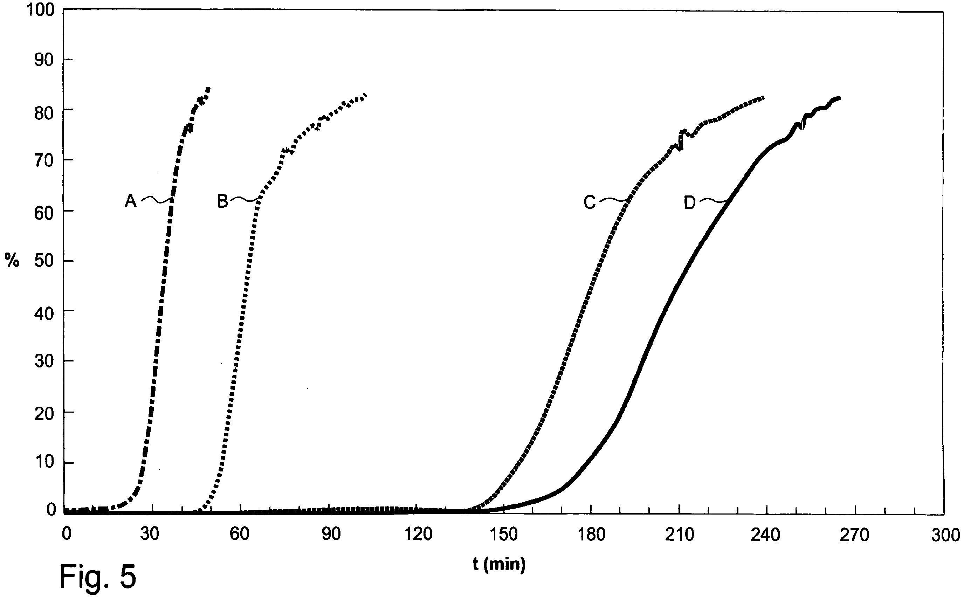

Die erfindungsgemäßen Filtermedien FM weisen im Vergleich zu nichterfindungsgemäßen Filtermedien FM' (Filtermedium A) und FM"' (Filtermedium B), wie sie in Fig. 4A und Fig. 4B dargestellt sind und welche auf eine Abfolge von lediglich einem Filterelementtyp, nämlich von Filterelementen mit hohem Druckverlust bzw. (Durch-)Strömungswiderstand auf Basis des zweiten Filterelements F2 bzw. 2, deutlich verbesserte Durchbrucheigenschaften auf, wie in Fig. 5 dargestellt.

Die zuvor erläuterten Figurendarstellungen werden auch im Rahmen der erfindungsgemäßen Ausführungsbeispiele zumindest teilweise nochmals weiterführend erläutert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

Insgesamt wird im Rahmen der vorliegenden Erfindung ein äußerst leistungsfähiges Filtermedium mit verbesserten Durchbrucheigenschaften für zu entfernende bzw. zu adsorbierende Schad- bzw. Giftstoffe bereitgestellt, welches zudem über einen insgesamt geringen Druckverlust bzw. (Durch-)Strömungswiderstand verfiigt, insbesondere da nur ein Teil der eingesetzten Filterelemente, insbesondere die zweiten Filterelemente F2, eine erhöhte Dichte aufweisen, was den Gesamteigenschaften des erfindungsgemäßen Filtermediums hinsichtlich der Durchströmeigenschaften jedoch nicht abträglich ist und gerade zu der erfindungsgemäßen Wirkung führt, die Durchbrucheigenschaften signifikant zu verbessern.

Weiterer Gegenstand der vorliegenden Erfindung - gemäß einem **zweiten** Aspekt der vorliegenden Erfindung - ist die erfindungsgemäße Verwendung des Filtermediums, wie zuvor definiert, nach der Erfindung für sorptive, insbesondere adsorptive Anwendungen, vorzugsweise für die Gasreinigung bzw. die Gasaufbereitung, bevorzugt für die Luftreinigung und/oder Luftaufbreitung.

Zudem ist weiterer Gegenstand der vorliegenden Erfindung - gemäß einem **dritten** Aspekt der vorliegenden Erfindung - die Verwendung des erfindungsgemäßen Filtermediums, wie zuvor definiert, für die Entfernung von Schadstoffen, insbesondere gasförmigen Schadstoffen, oder von umweltschädlichen, gesundheitsschädlichen oder toxischen Substanzen oder Gasen, vorzugsweise chemischen und/oder biologischen Gift- und/oder Schadstoffen.

Darüber hinaus betrifft die vorliegende Erfindung - gemäß einem **vierten** Aspekt der vorliegenden Erfindung - Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung mindestens eines Filtermediums wie zuvor beschrieben.

### AUSFÜHRUNGSBEISPIELE:

### 1. Herstellung der erfindungsgemäßen Filtermedien

Für die Herstellung der erfindungsgemäßen Filtermedien FM werden zunächst die jeweiligen ersten Filterelemente F1 bzw. die zweiten Filterelemente F2 hergestellt:

Zur Herstellung der ersten Filterelemente F1 wird ein offenporiger Schaumstoff eingesetzt, welcher vor Beladung mit dem partikelförmigen Adsorptionsmaterial auf Basis von Aktivkohle mit einem Klebstoff bzw. einer Haftmasse getränkt bzw. beaufschlagt wird. Nachfolgend erfolgt die Beladung mit dem partikulären Adsorptionsmaterial auf Basis von kugelförmiger Aktivkohle mit einem mittleren Teilchendurchmesser D₅₀ von etwa 0,5 mm. Überschüssiger Klebstoff bzw. überschüssiges Haftmittel kann insbesondere vor dem Aushärten entfernt werden, z. B. mittels Abquetschen des Schaumstoffs (z. B. durch Kalandrieren oder dergleichen). Gleichermaßen wird überschüssiges, d. h. nicht auf dem Schaumstoffmaterial fixiertes Adsorptionsmaterial entfernt.

Es resultieren zylinderförmige erste Filterelemente F1 mit einem Durchmesser D1 von etwa 10 cm und einer Höhe h1 von etwa 2 cm. Die in Rede stehenden ersten Filterelemente F1 weisen eine Dichte von etwa 300 kg/m³ und einen Beladungsgrad mit dem partikelförmigen Adsorptionsmaterial von etwa 70 Gew.-% auf, bezogen auf das erste Filterelement F1.

Für die so erhaltenen ersten Filterelemente resultiert ein Druckverlust auf Basis der DIN EN 14387 bzw. bei einer Leerrohrgeschwindigkeit von 6,4 cm/sec von etwa 1,3 Pa/cm.

Zur Herstellung der zweiten Filterelemente F2 kann insbesondere derart verfahren werden, dass ein erstes Trägermaterial hergestellt wird, beispielsweise indem Kleberfäden zu einem Netz versprüht werden, beispielsweise auf einem Drehteller mittels eines Rotationszerstäubers. Anschließend wird das zweite Adsorptionsmaterial auf das so bereitgestellte Trägermaterial gegeben und durch Aushärten des Klebstoffs bzw. Haftmittels fixiert. Anschließend kann ein weiteres Netz aus Kleberfäden auf das zuvor fixierte Adsorptionsmittel bzw. auf die Adsorptionsmittelschicht appliziert werden mit gegebenenfalls erneutem Auftrag einer weiteren Adsorptionsmittelschicht. Die vorgenannten Schritte des Aufbringens eines Klebstoffnetzes bzw. von Klebstofffäden mit dem anschließenden Aufbringen einer weiteren Adsorptionsschicht können mehrmals wiederholt werden, um auch hierdurch die Beladung bzw. Dichte des Adsorptionsmaterials und somit den gewünschten Druckverlust bzw. (Durch-)Strömungswiderstand der jeweiligen zweiten Filterelemente F2 einzustellen. Gegebenenfalls kann als obere und/oder untere Abdeckschicht eine bzw. zwei weitere Trägerschicht(en), beispielsweise auf Basis eines Vlieses, aufgebracht werden. Das so resultierende Schichtmaterial kann auf die gewünschten Abmessungen gebracht werden, insbesondere mittels Zuschneiden oder dergleichen.

Auf diese Weise können zylinderförmige zweite Filterelemente F2 mit einem Durchmesser d2 von etwa 10 cm und einer Höhe h2 von etwa 3 bis 4 mm erhalten werden. Die so hergestellten zweiten Filterelemente weisen eine Dichte von 440 kg/m³ auf. Der Beladungsgrad mit dem zweiten Adsorptionsmaterial beträgt dabei etwa 80 Gew.-%, bezogen auf das zweite Filterelement F2.

Die jeweiligen zweiten Filterelemente F2 weisen einen Druckverlust von etwa 30,5 Pa/cm auf, gemessen in Anlehnung an die DIN EN 14387 bzw. bei einer Leerrohrgeschwindigkeit von 6,4 m/sec.

Die erfindungsgemäßen Filtermedien FM werden durch entsprechendes Stapeln bzw. Aneinanderfügen der ersten Filterelemente F1 und zweiten Filterelemente F2 in jeweils variabler Anzahl und Anordnung erhalten, wobei die jeweiligen Filterelemente F1, F2 beispielsweise mittels punktförmiger Verklebung oder mittels Auftrags eines Klebstoffnetzes oder dergleichen aufeinander fixiert werden können.

### 2. Eigenschaften der erfindungsgemäßen Filtermedien FM

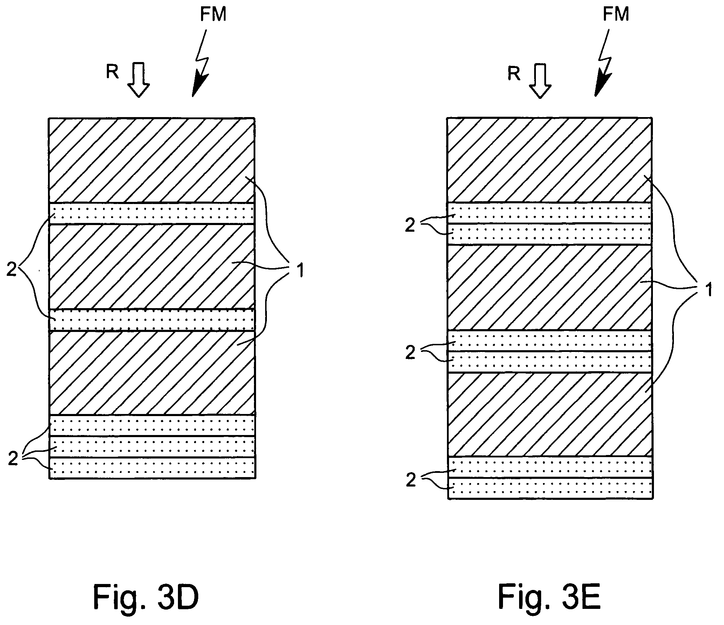

(i) Im Rahmen einer ersten Untersuchung wird das Durchbruchverhalten für verschiedene Anordnungen der jeweiligen ersten Filterelemente F1 und zweiten Filterelemente F2 in Bezug auf Schwefelwasserstoff (H₂S) unter ABEK 1-Anforderungen (vgl. DIN EN 14387) untersucht. Diesbezüglich wird ein erstes Filtermedium FM' untersucht, welches drei Lagen des zuvor angeführten zweiten Filterelements F2 aufweist (vgl. Fig. 4A, Filtermedium A, Vergleich). Zudem werden erfindungsgemäße Filtermedien FM1 und FM2 untersucht, wobei das erfindungsgemäße Filtermedium FM1 eine Abfolge eines Blocks aus zwei ersten Filterelementen F1 und eines Blocks aus drei zweiten Filterelementen F2 aufweist. Das erfindungsgemäße Filtermedium FM2 weist in alternierender Abfolge insgesamt drei erste Filterelemente F1 und drei zweite Filterelemente F2 auf (Abfolge: F1 - F2 - F 1 - F2 - F 1 - F2). Im Rahmen der Untersuchung erfolgt die Anordnung der jeweiligen Filtermedien derart, dass in Bezug auf die Filtermedien FM1 und FM2 das jeweils erste Filterelement F1 stromaufwärts positioniert ist.
Für das erste (Vergleichs-)Filtermedium FM' resultieren Durchbruchzeiten im Bereich von 65 bis 107 min (Messung als Stapel bzw. im Kanister, d. h. Einbau des Filtermediums in ein Gehäuse bzw. in eine Behausung). In Bezug auf das erfindungsgemäße Filtermedium FM1 resultieren Durchbruchzeiten, welche etwa um einen Faktor 1,8 im Vergleich zu dem Filtermedium FM' erhöht sind. In Bezug auf das erfindungsgemäße Filtermedium FM2 resultieren gleichermaßen signifikant verlängerte Durchbruchzeiten, welche etwa um einen Faktor 2 größer sind als die Durchbruchzeiten des nichterfindungsgemäßen Filtermediums FM'. Auf Basis der erfindungsgemäßen Konzeption resultieren somit insgesamt deutlich verbesserte Filtereigenschaften, insbesondere im Hinblick auf verlängerte Durchbruchzeiten.
(ii) In einer weiteren Versuchsreihe wird der Einfluss eines dritten Filterelements F3 mit einem Ionenaustauscher in Form eines Anionenaustauschers auf die Filtermedien FM untersucht, wobei das Ionenaustauschermaterial gleichermaßen auf einem offenporigen Schaumstoff fixiert ist. Das in Rede stehende Filterelement F3 auf Basis eines Ionenaustauschers wurde dabei als Flachschicht den zuvor beschriebenen Filtermedien FM' sowie FM1 und FM2 stromabwärts nachgeschaltet. Es resultiert eine weitere Erhöhung der Durchbruchzeit, welche für die erfindungsgemäßen Filtermedien FM1 und FM2 deutlich höher ausfällt als für das nichterfindungsgemäße Filtermedium FM'.
(iii) In einem weiteren Untersuchungskomplex wird das Durchbruchverhalten von verschiedenen erfindungsgemäßen Filtermedien FM3 bis FM7 ermittelt, wobei das erfindungsgemäße Filtermedium FM3 den in Fig. 3A gezeigten Aufbau, das erfindungsgemäße Filtermedium FM4 den in Fig. 3B gezeigten Aufbau, das erfindungsgemäße Filtermedium FM5 den in Fig. 3C gezeigten Aufbau, das erfindungsgemäße Filtermedium FM6 den in Fig. 3D dargestellten Auf bau und schließlich das erfindungsgemäße Filtermedium FM7 den in Fig. 3E dargestellten Aufbau auf Basis der ersten Filterelemente F1 und der zweiten Filterelemente F2 aufweisen. Als Vergleich dient ein nichterfindungssgemäßes Filtermedium FM", welches acht zweite Filterelemente F2 aufweist.
Die Durchbruchzeiten werden für Cyanchlorid (ClCN) bei einem Luftstrom von 30 1/min mit einer ClCN-Konzentration von 4.000 mg/m³ bei 24 °C und einer relativen Feuchte von 80 % bestimmt. Die Durchbruchzeit wird bei einem Durchbruch von 5 mg/m³ ermittelt.
Für das Vergleichsfiltermaterial FM" ergibt sich eine Durchbruchzeit von 9 min. Für die erfindungsgemäßen Filtermedien FM4 bis FM7 werden demgegenüber signifikant verbesserte Durchbruchzeiten ermittelt, wie nachfolgend angeführt:
Filterelement FM" 9 min
Filterelement FM3 32 min
Filterelement FM4 70 min
Filterelement FM5 19 min
Filterelement FM6 53 min
Filterelement FM7 67 min

Durch die spezielle Anordnung und Kombination der den erfindungsgemäßen Filtermedien FM3 bis FM7 zugrundeliegenden ersten bzw. zweiten Filterelementen F1 bzw. F2 kann somit in völlig überraschender Weise eine signifikante Verlängerung der Durchbruchzeit erreicht werden.
(iv) In einer weiteren Untersuchungsreihe wurden zwei weitere erfindungsgemäße Filtermedien FM8 und FM9 untersucht, wobei das erfindungsgemäße Filterelement FM8 (Filterelement C) den in Fig. 4C dargestellten Aufbau und das erfindungsgemäße Filterelement FM9 (Filterelement D) den in Fig. 4D dargestellten Aufbau aufweist. In Bezug auf das erfindungsgemäße Filterelement FM9 werden die jeweiligen Schichten auf Basis des ersten Filterelements F1 im Vergleich zu dem erfindungsgemäßen Filtermedium FM8 leicht komprimiert, so dass diesbezüglich etwas höhere Druckverluste bzw. (Durch-)Strömungswiderstände resultieren, welche jedoch weiterhin geringer sind als diejenigen des zweiten Filterelements F2. Für die in Rede stehenden erfindungsgemäßen Filtermedien FM8 und FM9 wird das Durchbruchverhalten in Bezug auf die Substanz Cyclohexan im Vergleich zu nichterfindungsgemäßen Filtermedien FM' (Filterelement A) sowie FM"' (Filterelement B) (vgl. Fig. 4A sowie Fig. 4B) ermittelt. Darüber hinaus wird der Druckverlust der jeweiligen Filtermedien bestimmt.
Die zugrundeliegenden Untersuchungen werden bei einem Luftstrom von 30 1/min mit einer Cyclohexankonzentration von 1.000 ppm bei 20 °C und einer relativen Feuchte von 70 % ermittelt. Die zugrundeliegende Leerrohrgeschwindigkeit betrug etwa 6,4 cm/sec. Die Durchbruchzeit wurde für einen Durchbruch von 10 ppm Cyclohexan ermittelt.
In diesem Zusammenhang wurden folgende Durchbruchzeiten sowie folgende Druckverluste für die in Rede stehenden Filtermedien ermittelt:

| | Durchbruchzeit | Druckverlust |
|---|---|---|
| FM' | 19 min | 23 Pa |
| FM"' | 47 min | 50 Pa |
| FM8 | 140 min | 34 Pa |
| FM9 | 147 min | 69 Pa |

Die zugehörigen Durchbruchkurven sind zudem in Fig. 5 dargestellt.
Die Untersuchungen belegen das signifikant verbesserte Durchbruchverhalten der erfindungsgemäßen Filtermedien FM8 und FM9 gegenüber den entsprechenden Vergleichsfiltermedien FM' und FM"', wobei die erfindungsgemäßen Filtermedien FM8 und FM9 gleichzeitig über einen geringen Gesamtdruckverlust verfügen, was anwendungsspezifisch von Vorteil sein kann.

Im Ergebnis weisen die erfindungsgemäßen Filtermedien im Vergleich zum Stand der Technik deutlich verbesserte Eigenschaften hinsichtlich der Adsorptionseigenschaften in Bezug auf toxische Substanzen auf.

## Patentansprüche

1. Adsorptives Filtermedium (FM), insbesondere zur Aufreinigung von Gasen und/oder Gasgemischen, vorzugsweise Luft, und/oder insbesondere zur Entfernung von chemischen und/oder biologischen Giften und/oder Schadstoffen aus Gasen und/oder Gasgemischen, vorzugsweise Luft,
wobei das Filtermedium (FM)
- eine Mehrzahl eines ersten Filterelements (1) mit einem ersten Adsorptionsmaterial (3) in Form von Adsorbenspartikeln und
- eine Mehrzahl eines von dem ersten Filterelement (1) verschiedenen zweiten Filterelements (2) mit einem zweiten Adsorptionsmaterial (3') in Form von Adsorbenspartikeln
aufweist,
wobei das erste Adsorptionsmaterial (3) und das zweite Adsorptionsmaterial (3'), unabhängig voneinander, aus kornförmiger Aktivkohle gebildet ist,
wobei die ersten Filterelemente (1) und die zweiten Filterelemente (2) stapelförmig angeordnet und/oder aufeinander gestapelt sind,
wobei mindestens ein erstes Filterelement (1) stromaufwärts zu mindestens einem zweiten Filterelement (2) angeordnet ist,
wobei das erste Filterelement (1) und das zweite Filterelement (2) voneinander verschiedene Druckverluste und/oder voneinander verschiedene (Durch-)Strömungswiderstände aufweisen, wobei das zweite Filterelement (2) einen größeren Druckverlust und/oder (Durch-)Strömungswiderstand als das erste Filterelement (1) aufweist, und
wobei stromabwärts als zuletzt positioniertes Filterelement (1, 2) ein zweites Filterelement (2) angeordnet ist, wobei das stromabwärts zuletzt positionierte zweite Filterelement (2) einen höheren Druckverlust und/oder (Durch-)Strömungswiderstand als die stromaufwärts zu dem zuletzt positionierten Filterelement angeordneten Filterelemente (1, 2) aufweist.

2. Filtermedium nach Anspruch 1,
wobei das Filtermedium (FM) stromaufwärts von mindestens einem ersten Filterelement (1) begrenzt ist und/oder
wobei das stromabwärts zuerst positionierte erste Filterelement (1) einen geringeren Druckverlust bzw. (Durch-)Strömungswiderstand als die stromabwärts zu dem zuerst positionierten Filterelement angeordneten Filterelemente (1, 2) aufweist.

3. Filtermedium nach Anspruch 1 oder 2,
wobei die ersten Filterelemente (1) und die zweiten Filterelemente (2) alternierend und/oder zueinander abwechselnd und/oder periodisch angeordnet sind und/oder
wobei die ersten Filterelemente (1) blockweise und/oder in Form mindestens eines Blocks (B1) angeordnet sind, insbesondere wobei der Block (B1) der ersten Filterelemente (1) mindestens zwei, vorzugsweise drei oder mehr, erste Filterelemente (1) umfasst und/oder wobei mehrere erste Filterelemente (1), insbesondere mindestens zwei, vorzugsweise drei oder mehr, erste Filterelemente (1) aufeinander gestapelt sind und/oder in unmittelbarer Abfolge zueinander angeordnet sind, und/oder
wobei die zweiten Filterelemente (2) blockweise und/oder in Form mindestens eines Blocks (B2) angeordnet sind, insbesondere wobei der Block (B2) der zweiten Filterelemente (2) mindestens zwei, vorzugsweise drei oder mehr, zweite Filterelemente (2) umfasst und/oder wobei mehrere zweite Filterelemente (2), insbesondere mindestens zwei, vorzugsweise drei oder mehr, zweite Filterelemente (2) aufeinander gestapelt sind und/oder in unmittelbarer Abfolge zueinander angeordnet sind, und/oder wobei die ersten Filterelemente (1) und/oder die zweiten Filterelemente (2) blockweise alternierend und/oder blockweise zueinander abwechselnd und/oder blockweise periodisch angeordnet sind und/oder
wobei das Filtermedium (FM) stromaufwärts von mindestens einem Block (B1) der ersten Filterelemente (1) begrenzt ist, insbesondere wobei der Block (B1) mindestens zwei, vorzugsweise drei oder mehr, erste Filterelemente (1) umfasst, und/oder wobei stromabwärts als zuerst positionierter Block mindestens ein Block (B1) der ersten Filterelemente (1) angeordnet ist, insbesondere wobei der Block (B1) mindestens zwei, vorzugsweise drei oder mehr, erste Filterelemente (1) umfasst, und/oder
wobei das Filtermedium (FM) stromabwärts von mindestens einem Block (B2) der zweiten Filterelemente (2) begrenzt ist, insbesondere wobei der Block (B2) mindestens zwei, vorzugsweise drei oder mehr, zweite Filterelemente (2) umfasst und/oder wobei stromabwärts als zuletzt positionierter Block mindestens ein Block (B2) der zweiten Filterelemente (2) angeordnet ist, insbesondere wobei der Block (B2) mindestens zwei, vorzugsweise drei oder mehr, zweite Filterelemente (2) umfasst.

4. Filtermedium nach einem der vorangehenden Ansprüche,
wobei das Filtermedium (FM) und/oder das erste Filterelement (1) und/oder das zweite Filterelement (2) kastenförmig und/oder quaderförmig und/oder zylinderförmig, insbesondere zylinderförmig, ausgebildet sind und/oder
wobei das erste Filterelement (1) und/oder das zweite Filterelement (2), insbesondere das erste Filterelement (1) und das zweite Filterelement (2), mit ihren jeweiligen zumindest im Wesentlichen planaren und/oder ebenen Grenzflächen und/oder mit ihren jeweiligen Haupterstreckungsebenen zumindest im Wesentlichen senkrecht zur Hauptdurchströmungsrichtung angeordnet sind und/oder
wobei das erste Filterelement (1) und das zweite Filterelement (2) zumindest im Wesentlichen identische Breiten und/oder Tiefen und/oder zumindest im Wesentlichen identische Durchmesser (d1, d2) aufweisen, bezogen auf die Ausdehnung quer und/oder senkrecht zur Hauptdurchströmungsrichtung.

5. Filtermedium nach einem der vorangehenden Ansprüche,
wobei die Dichte (D1) des ersten Filterelements (1) kleiner ist als die Dichte (D2) des zweiten Filterelements (2) und/oder
wobei die Dichte (D2) des zweiten Filterelements (2) um einen Faktor im Bereich von 1,01 bis 50, insbesondere 1,05 bis 40, vorzugsweise 1,075 bis 30, bevorzugt 1,1 bis 25, besonders bevorzugt 1,15 bis 20, größer ist als die Dichte (D1) des ersten Filterelements (1) und/oder wobei die Dichte (D2) des zweiten Filterelements (2) um einen Faktor von mindestens 1,01, insbesondere mindestens 1,05, vorzugsweise mindestens 1,075, bevorzugt mindestens 1,1, besonders bevorzugt mindestens 1,15, größer ist als die Dichte (D1) des ersten Filterelements (1) und/oder wobei die Dichte (D2) des zweiten Filterelements (2) um mindestens 1 %, insbesondere mindestens 2,5 %, vorzugsweise mindestens 5%, bevorzugt mindestens 10%, besonders bevorzugt mindestens 20 %, ganz besonders bevorzugt mindestens 25 %, größer ist als die Dichte (D1) des ersten Filterelements (1), bezogen auf die Dichte (D1) des ersten Filterelements (1) und/oder wobei das Verhältnis der Dichte (D2) des zweiten Filterelements (2) zu der Dichte (D1) des ersten Filterelements (1) [Verhältnis D2 : D1] im Bereich von 10 : 1 bis 1,05 : 1, insbesondere 8 : 1 bis 1,1 : 1, vorzugsweise 6 : 1 bis 1,15 : 1, bevorzugt 5 : 1 bis 1,2 : 1, besonders bevorzugt 3 : 1 bis 1,3 : 1, ganz besonders bevorzugt 2 : 1 bis 1,5 : 1, liegt und/oder
wobei das erste Filterelement (1) eine Dichte (D1) im Bereich von 50kg/m³ bis 800 kg/m³, insbesondere 100 kg/m³ bis 600 kg/m³, vorzugsweise 150 kg/m³ bis 500 kg/m³, bevorzugt 200 kg/m³ bis 450 kg/m³, besonders bevorzugt 250 kg/m³ bis 350 kg/m³, aufweist, insbesondere mit der Maßgabe, dass die Dichte (D1) des ersten Filterelements (1) kleiner ist als die Dichte (D2) des zweiten Filterelements (2) und/oder
wobei das zweite Filterelement (2) eine Dichte (D2) im Bereich von 100 kg/m³ bis 1.250 kg/m³, insbesondere 150 kg/m³ bis 1.000 kg/m³, vorzugsweise 200 kg/m³ bis 800 kg/m³, bevorzugt 250 kg/m³ bis 600 kg/m³, besonders bevorzugt 350 kg/m³ bis 500 kg/m³, ganz besonders bevorzugt 375 kg/m³ bis 450 kg/m³, aufweist, insbesondere mit der Maßgabe, dass die Dichte (D2) des zweiten Filterelements (2) größer ist als die Dichte (D1) des ersten Filterelements (1).

6. Filtermedium nach einem der vorangehenden Ansprüche,
wobei der Druckverlust und/oder (Durch-)Strömungswiderstand des zweiten Filterelements (2) um einen Faktor im Bereich von 1,5 bis 300, insbesondere 2 bis 250, vorzugsweise 3 bis 200, bevorzugt im Bereich von 4 bis 150, besonders bevorzugt 5 bis 100, größer ist als der Druckverlust und/oder (Durch-)Strömungswiderstand des ersten Filterelements (1) und/oder wobei der Druckverlust und/oder (Durch-)Strömungswiderstand des zweiten Filterelements (2) um einen Faktor von mindestens 1,5, insbesondere mindestens 2, vorzugsweise mindestens 3, bevorzugt mindestens 4, besonders bevorzugt mindestens 5, größer ist als der Druckverlust und/oder (Durch-)Strömungswiderstand des ersten Filterelements (1) und/oder
wobei das Verhältnis des Druckverlusts und/oder (Durch-)Strömungswiderstands des zweiten Filterelements (2) zu dem Druckverlust und/oder (Durch-)Strömungswiderstand des ersten Filterelements (1) im Bereich von 500 : 1 bis 1,5 : 1, insbesondere 400 : 1 bis 1,75 : 1, vorzugsweise 300 : 1 bis 2 : 1, bevorzugt 200 : 1 bis 3 : 1, besonders bevorzugt 150 : 1 bis 4 : 1, ganz besonders bevorzugt 100 : 1 bis 5 : 1, liegt und/oder
wobei das erste Filterelement (1) einen Druckverlust und/oder (Durch-)Strömungswiderstand im Bereich von 0,1 Pa/cm bis 100 Pa/cm, insbesondere 0,25 Pa/cm bis 75 Pa/cm, vorzugsweise 0,5 Pa/cm bis 50 Pa/cm, bevorzugt 0,75 Pa/cm bis 30 Pa/cm, besonders bevorzugt 1 Pa/cm bis 25 Pa/cm, aufweist, insbesondere mit der Maßgabe, dass der Druckverlust und/oder (Durch-)Strömungswiderstand des ersten Filterelements (1) kleiner ist als der Druckverlust und/oder (Durch-)Strömungswiderstand des zweiten Filterelements (2) und/oder
wobei das zweite Filterelement (2) einen Druckverlust und/oder (Durch-)Strömungswiderstand im Bereich von 1 Pa/cm bis 250 Pa/cm, insbesondere 2 Pa/cm bis 200 Pa/cm, vorzugsweise 3 Pa/cm bis 150 Pa/cm, bevorzugt 5 Pa/cm bis 125 Pa/cm, besonders bevorzugt 10 Pa/cm bis 100 Pa/cm, aufweist, insbesondere mit der Maßgabe, dass der Druckverlust und/oder (Durch-)Strömungswiderstand des zweiten Filterelements (2) größer ist als der Druckverlust und/oder (Durch-)Strömungswiderstand des ersten Filterelements (1).

7. Filtermedium nach einem der vorangehenden Ansprüche,
wobei das erste Filterelement (1) mindestens ein erstes Trägermaterial (4) aufweist, insbesondere wobei das erste Adsorptionsmaterial (3) an dem ersten Trägermaterial (4) fixiert und/oder befestigt, insbesondere mit dem ersten Trägermaterial (4) verklebt ist, und insbesondere wobei das erste Trägermaterial (4) eine dreidimensionale Struktur aufweist, insbesondere wobei das erste Trägermaterial als vorzugsweise offenporiger Schaumstoff, bevorzugt Polyurethanschaumstoff, besonders bevorzugt retikulierter Polyurethanschaumstoff, ausgebildet ist, und insbesondere wobei der mittlere Porendurchmesser des Schaumstoffs mindestens doppelt so groß, insbesondere mindestens zweieinhalbmal so groß, vorzugsweise mindestens dreimal so groß ist wie der mittlere Teilchendurchmesser D₅₀ des ersten Adsorptionsmaterials (3), und/oder
wobei die Beladungsmenge des ersten Adsorptionsmaterials (3) im Bereich von 5 bis 90 Gew.-%, insbesondere 10 bis 85 Gew.-%, vorzugsweise 15 bis 80 Gew.-%, besonders bevorzugt 20 bis 75 Gew.-%, bezogen auf das erste Filterelement (1), liegt und/oder wobei das zweite Filterelement (2) mindestens ein zweites Trägermaterial (5) aufweist,
insbesondere wobei das zweite Adsorptionsmaterial (3') an dem zweiten Trägermaterial (5) fixiert und/oder befestigt, insbesondere mit dem zweiten Trägermaterial (5) verklebt ist, und insbesondere wobei das zweite Trägermaterial (5) eine zweidimensionale und/oder flächige Struktur aufweist, insbesondere wobei das zweite Trägermaterial (5) als Flächengebilde ausgebildet ist, und insbesondere wobei wobei das zweite Trägermaterial (5) ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ist, insbesondere wobei das zweite Trägermaterial (5) ein Flächengewicht im Bereich von 5 bis 800 g/m², insbesondere 10 bis 500 g/m², bevorzugt 25 bis 400 g/m², aufweist, und/oder insbesondere wobei das zweite Filterelement (2) mindestens zwei Lagen und mindestens zwei Einheiten des zweiten Trägermaterials (5) umfasst, insbesondere wobei das zweite Adsorptionsmaterial (3') zwischen den Lagen und/oder Einheiten des zweiten Trägermaterials (5) angeordnet ist, und/oder
wobei die Beladungsmenge des zweiten Adsorptionsmaterials (3') im Bereich von 10 bis 99,5 Gew.-%, insbesondere 15 bis 98 Gew.-%, vorzugsweise 20 bis 90 Gew.-%, besonders bevorzugt 30 bis 85 Gew.-%, bezogen auf das zweite Filterelement (2), liegt.

8. Filtermedium nach einem der vorangehenden Ansprüche,
wobei das erste Adsorptionsmaterial (3) und/oder das zweite Adsorptionsmaterial (3'), unabhängig voneinander, aus kugelförmiger Aktivkohle gebildet ist und/oder
wobei das erste Adsorptionsmaterial (3) und das zweite Adsorptionsmaterial (3') jeweils zumindest im Wesentlichen identische partikelbildende Materialien aufweisen oder hieraus bestehen.

9. Filtermedium nach einem der vorangehenden Ansprüche,
wobei das erste Adsorptionsmaterial (3) und/oder das zweite Adsorptionsmaterial (3'), unabhängig voneinander, Teilchengrößen, insbesondere Teilchendurchmesser, von mindestens 0,001 mm, insbesondere mindestens 0,01 mm, vorzugsweise mindestens 0,1 mm, bevorzugt mindestens 0,2 mm, aufweisen und/oder wobei das erste Adsorptionsmaterial (3) und/oder das zweite Adsorptionsmaterial (3'), unabhängig voneinander, Teilchengrößen, insbesondere Teilchendurchmesser, im Bereich von 0,001 bis 5 mm, insbesondere 0,01 bis 3 mm, vorzugsweise 0,2 bis 2 mm, bevorzugt 0,2 bis 1,5 mm, besonders bevorzugt 0,3 bis 1 mm, aufweisen und/oder wobei das erste Adsorptionsmaterial (3) und/oder das zweite Adsorptionsmaterial (3'),
unabhängig voneinander, eine mittlere Teilchengröße, insbesondere einen mittleren Teilchendurchmesser D₅₀, von mindestens 0,01 mm, insbesondere mindestens 0,05 mm, vorzugsweise mindestens 0,1 mm, bevorzugt mindestens 0,2 mm, besonders bevorzugt mindestens 0,3 mm, aufweisen und/oder wobei das erste Adsorptionsmaterial (3) und/oder das zweite Adsorptionsmaterial (3'), unabhängig voneinander, eine mittlere Teilchengröße, insbesondere einen mittleren Teilchendurchmesser D₅₀, im Bereich von 0,01 bis 4 mm, insbesondere 0,05 bis 2 mm, vorzugsweise 0,1 bis 1,5 mm, bevorzugt 0,2 bis 1,2 mm, besonders bevorzugt 0,3 bis 1 mm, aufweisen.

10. Filtermedium nach einem der vorangehenden Ansprüche, wobei sich das erste Adsorptionsmaterial (3) und das zweite Adsorptionsmaterial (3') in mindestens einem physikalischen und/oder chemischen Parameter unterscheiden, insbesondere wobei der physikalische und/oder chemische Parameter ausgewählt ist aus der Gruppe von (i) Teilchengröße, insbesondere mittlerer Teilchengröße und/oder Teilchendurchmesser, insbesondere mittlerer Teilchendurchmesser; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittleren Porendurchmesser; (v) Imprägnierung und/oder katalytischer Ausrüstung sowie (vi) Teilchenform, vorzugsweise Teilchengröße, insbesondere mittlerer Teilchengröße und/oder Teilchendurchmesser, insbesondere mittlerer Teilchendurchmesser D₅₀.

11. Filtermedium nach einem der vorangehenden Ansprüche, wobei das erste Adsorptionsmaterial (3) und das zweite Adsorptionsmaterial (3') unterschiedliche Teilchengrößen, insbesondere unterschiedliche mittlere Teilchengrößen und/oder Teilchendurchmesser, insbesondere unterschiedliche mittlere Teilchendurchmesser D₅₀, aufweisen, insbesondere wobei das erste Adsorptionsmaterial (3) im Vergleich zu dem zweiten Adsorptionsmaterial (3') eine größere Teilchengröße, insbesondere eine größere mittlere Teilchengröße und/oder einen größeren Teilchendurchmesser, insbesondere einen größeren mittleren Teilchendurchmesser D₅₀, aufweist und/oder insbesondere wobei das zweite Adsorptionsmaterial (3') im Vergleich zu dem ersten Adsorptionsmaterial (3) eine kleinere Teilchengröße, insbesondere eine kleinere mittlere Teilchengröße und/oder einen kleineren Teilchendurchmesser, insbesondere einen kleineren mittleren Teilchendurchmesser D₅₀, aufweist.

12. Filtermedium nach einem der vorangehenden Ansprüche, wobei die Teilchengrößen, insbesondere die Teilchendurchmesser, vorzugsweise die mittleren Teilchendurchmesser D₅₀, des ersten Adsorptionsmaterials (3) einerseits und des zweiten Adsorptionsmaterials (3') andererseits um mindestens einen Faktor 1,1, insbesondere mindestens einen Faktor 1,25, vorzugsweise mindestens einen Faktor 1,5, bevorzugt mindestens einen Faktor 2, besonders bevorzugt mindestens einen Faktor 5, ganz besonders bevorzugt mindestens einen Faktor 10, jeweils bezogen auf den kleineren Teilchengrößenwert, voneinander verschieden sind und/oder wobei die Teilchengrößen, insbesondere die Teilchendurchmesser, vorzugsweise die mittleren Teilchendurchmesser D₅₀, des ersten Adsorptionsmaterials (3) einerseits und des zweiten Adsorptionsmaterials (3') andererseits um mindestens 0,001 mm, insbesondere um mindestens 0,01 mm, vorzugsweise um mindestens 0,05 mm, bevorzugt um mindestens 0,1 mm, verschieden sind, insbesondere mit der Maßgabe, dass das erste Adsorptionsmaterial (3) die größeren Werte aufweist und/oder insbesondere mit der Maßgabe, dass das zweite Adsorptionsmaterial (3') die kleineren Werte aufweist.

13. Filtermedium nach einem der vorangehenden Ansprüche, wobei das Filtermedium (FM) mindestens eine Partikel- und/oder Aerosolfilterschicht (6) aufweist, insbesondere wobei die Partikel- und/oder Aerosolfilterschicht (6) stromaufwärts zu den Filterelementen (1, 2) positioniert und/oder angeordnet ist und/oder insbesondere wobei die Partikel- und/oder Aerosolfilterschicht (6) den Filterelementen (1, 2) stromaufwärts vorgeschaltet ist.

14. Verwendung eines Filtermediums nach einem der vorangehenden Ansprüche für sorptive, insbesondere adsorptive Anwendungen, vorzugsweise für die Gasreinigung und/oder die Gasaufbereitung, bevorzugt für die Luftreinigung und/oder Luftaufbreitung und/oder
für die Entfernung von Schadstoffen, insbesondere gasförmigen Schadstoffen, oder von umweltschädlichen, gesundheitsschädlichen oder toxischen Substanzen oder Gasen, vorzugsweise chemischen und/oder biologischen Gift- und/oder Schadstoffen.

15. Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung mindestens eines Filtermediums nach einem der vorangehenden Ansprüche und/oder aufweisend mindestens ein Filtermedium nach einem der vorangehenden Ansprüche.

## Claims

1. Adsorptive filter medium (FM), in particular for the purification of gases and/or gas mixtures, preferably air, and/or in particular for the removal of chemical and/or biological poisons and/or pollutants from gases and/or gas mixtures, preferably air,
wherein the filter medium (FM) comprises
- a plurality of a first filter element (1) with a first adsorbent (3) in the form of adsorbent particles, and
- a plurality of a second filter element (2) that is different from the first filter element (1) and has a second adsorbent material (3') in the form of adsorbent particles, wherein the first adsorbent material (3) and the second adsorption material (3') are formed of grain-shaped activated carbon independently from each other,
wherein the first filter elements (1) and the second filter elements (2) are arranged in the shape of a stack and/or are stacked on each other,
wherein at least a first filter element (1) is arranged upstream of at least a second filter element (2),
wherein the first filter element (1) and the second filter element (2) have pressure losses different from each other and/or (throughput) flow resistances different from each other, wherein the second filter element (2) has a larger pressure loss and/or (throughput) flow resistance than the first element (1), and
wherein a second filter element (2) is arranged downstream of the last positioned filter element (1, 2), wherein the last downstream positioned second filter element (2) has a higher pressure loss and/or (throughput) flow resistance than the last upstream positioned filter element (1, 2).

2. Filter medium according to claim 1,
wherein the filter media (FM) upstream is limited by at least one first filter element (1) and/or
wherein the first downstream positioned first filter element (1) has a lower pressure loss or (throughput) flow resistance than the filter elements (1, 2) positioned downstream of the first filter element.

3. Filter medium according to claim 1 or 2,
wherein the first filter elements (1) and the second filter elements (2) are arranged alternately and/or alternate with respect to each other and/or periodically, and/or
wherein the first filter elements (1) are arranged block by block and/or at least in the form of one block (B1), in particular wherein the block (B1) of the first filter elements (1) comprises at least two, preferably three or more, first filter elements (1) and/or wherein a first plurality of filter elements (1), in particular at least two, preferably three or more, first filter elements (1) are stacked on each other and/or are arranged in immediate succession to each other, and/or
wherein the second filter elements (2) are arranged in blocks and/or in the form of at least one block (B2), in particular wherein the block (B2) of the second filter elements (2) comprises at least two, preferably three or more, second filter elements (2), and/or wherein a plurality of second filter elements (2), particularly at least two, preferably three or more, second filter elements (2) are stacked on each other and/or are arranged in immediate succession to each other, and/or
wherein the first filter elements (1) and/or the second filter elements (2) alternate blockwise and/or are arranged alternately to one another blockwise and/or are arranged periodically to one another blockwise, and/or
wherein the filter media (FM) is limited upstream by at least one block (B1) of the first filter elements (1), in particular wherein the block (B1) comprises at least two, preferably three or more, first filter elements (1), and/or wherein at least one block (B1) of the first filter element (1) is arranged downstream as the first positioned block, in particular wherein the block (B1) comprises at least two, preferably three or more, first filter elements (1), and/or
wherein the filter media (FM) is limited downstream by at least one block (B2) of the second filter elements (2), in particular wherein the block (B2) comprises at least two, preferably three or more, second filter elements (2) and/or wherein at least one block (B2) of the second filter elements (2) is arranged downstream as the last positioned block, in particular wherein the block (B2) comprises at least two, preferably three or more, second filter elements (2).

4. Filter medium according to one of the preceding claims,
wherein the filter medium (FM) and/or the first filter element (1), and/or the second filter element (2), are box-shaped and/or cuboid in shape and/or cylinder-shaped, in particular cylinder-shaped, and/or
wherein the first filter element (1) and/or the second filter element (2), in particular the first filter element (1) and the second filter element (2), with their respective at least substantially planar and/or plane boundary surfaces and/or with their respective main extension planes, are arranged at least substantially perpendicular to the main flow direction, and/or
wherein the first filter element (1) and the second filter element (2) have at least substantially identical widths and/or depths and/or at least substantially identical diameters (d1, d2), based on the transverse and/or perpendicular extension to the main flow direction.

5. Filter medium according to any one of the preceding claims,
wherein the density (D1) of the first filter element (1) is smaller than the density (D2) of the second filter element (2) and/or
wherein the density (D2) of the second filter element (2) is greater than the density (D1) of the first filter element (1) by a factor in the range of 1.01 to 50, particularly 1.05 to 40, preferably 1.075 to 30, more preferably 1.1 to 25, particularly preferably from 1.15 to 20 and/or wherein the density (D2) of the second filter element (2) is greater than the density (D1) of the first filter element (1) by a factor of at least 1.01, especially at least 1.05, in particular at least 1.075, preferably at least 1.1, more preferably at least 1.15, and/or wherein the density (D2) of the second filter element (2) is greater than the density (D1) of the first filter element (1) by at least 1%, in particular at least 2.5%, preferably at least 5%, more preferably at least 10%, particularly preferably at least 20%, most preferably at least 25%, based on the density (D1) of the first filter element (1) and/or
wherein the ratio of the density (D2) of the second filter element (2) to the density (D1) of the first filter element (1) [ratio D2: D1] is in the range of 10: 1 to 1.05: 1, especially 8: 1 to 1.1: 1, in particular 6: 1 to 1.15: 1, preferably 5: 1 to 1.2: 1, more preferably 3: 1 to 1.3: 1, most preferably from 2: 1 to 1.5 : 1, and/or
wherein the first filter element (1) has a density (D1) in the range of 50 kg/m³ to 800 kg/m³, in particular 100 kg/m³ to 600 kg/m³, preferably 150 kg/m³ to 500 kg/m³, more preferably 200 kg/m³ to 450 kg/m³, particularly preferably 250 kg/m³ to 350 kg/m³, in particular with the proviso that the density (D1) of the first filter element (1) is smaller than the density (D2) of the second filter element (2) and/or
wherein the second filter element (2) has a density (D2) in the range of 100 kg/m³ to 1,250 kg/m³, in particular 150 kg/m³ to 1,000 kg/m³, preferably 200 kg/m³ to 800 kg/m³, more preferably 250 kg/m³ to 600 kg/m³, particularly preferably 350 kg/m³ to 500 kg/m³, most preferably 375 kg/m³ to 450 kg/m³, in particular with the proviso that the density (D2) of the second filter element (2) is greater than the density (D1) of the first filter element (1).

6. Filter medium according to any one of the preceding claims,
wherein the pressure loss and/or (throughput) flow resistance of the second filter element (2) is greater than the pressure loss and/or the (throughput) flow resistance of the first filter element (1) by a factor in the range of 1.5 to 300, in particular from 2 to 250, preferably 3 to 200, particularly preferably 4 to 150, most preferably 5 to 100, and/or wherein the pressure loss and/or (throughput) flow resistance of the second filter element (2) is greater than the pressure loss and/or (throughput) flow resistance of the first filter element (1) by a factor of at least 1.5, especially at least 2, more preferably at least 3, particularly preferably at least 4, most preferably at least 5, and/or
wherein the ratio of the pressure loss and/or (throughput) flow resistance of the second filter element (2) to the pressure loss and/or (throughput) flow resistance of the first filter elements (1) is in the range from 500: 1 to 1.5: 1, in particular 400: 1 to 1.75: 1, preferably 300: 1 to 2: 1, more preferably 200: 1 to 3: 1, particularly preferably 150: 1 to 4: 1, most preferably 100: 1 to 5: 1, and/or
wherein the first filter element (1) has a pressure loss and/or (throughput) flow resistance in the range of 0.1 Pa/cm to 100 Pa/cm, in particular from 0.25 Pa/cm to 75 Pa/cm, preferably 0.5 Pa/cm to 50 Pa/cm, more preferably 0.75 Pa/cm to 30 Pa/cm, particularly preferably 1 Pa/cm to 25 Pa/cm, in particular with the proviso that the pressure loss and/or (throughput) flow resistance of the first filter element (1) is smaller than the pressure loss and/or (throughput) flow resistance of the second filter element (2), and/or
wherein the second filter element (2) has a pressure loss and/or (throughput) flow resistance in the range of 1 Pa/cm to 250 Pa/cm, in particular 2 Pa/cm to 200 Pa/cm, preferably 3 Pa/cm to 150 Pa/cm, more preferably 5 Pa/cm to 125 Pa/cm, particularly preferably 10 Pa/cm to 100 Pa/cm, in particular with the proviso that the pressure loss and/or (throughput) flow resistance of the second filter element (2) is greater than the pressure loss and/or (throughput) flow resistance of the first filter element (1).

7. Filter medium according to one of the preceding claims,
wherein the first filter element (1) comprises at least a first carrier material (4), in particular wherein the first adsorbent material (3) is fixed and/or secured to the first carrier material (4), in particular glued to the first carrier material (4), and in particular wherein the first carrier material (4) has a three-dimensional structure, in particular wherein the first carrier material is formed as a preferably open-pore foam, preferably polyurethane foam, particularly preferably reticulated polyurethane foam, and in particular wherein the average pore diameter of the foam is at least twice as great, in particular at least two and a half times as great, preferably at least three times as great, as the average particle diameter D₅₀ of the first adsorbent material (3), and/or
wherein the load mass of the first adsorption material (3) lies in the range of 5 to 90 wt.-%, in particular 10 to 85 wt.-%, preferably 15 to 80 wt.-%, particularly preferably 20 to 75 wt.-%, based on the first filter element (1), and/or
wherein the second filter element (2) comprises at least a second carrier material (5), in particular wherein the second adsorbent material (3') is fixed and/or secured to the second carrier material (5), in particular glued to the second carrier material (5), and in particular wherein the second carrier material (5) has a two-dimensional and/or planar structure, in particular wherein the second carrier material (5) is formed as a sheet, and/or in particular wherein the second carrier material (5) is a textile fabric, preferably an air pervious textile material, preferably a woven fabric, knitted fabric, laid fabric or composite material, in particular non-woven fabric, in particular wherein the second carrier material (5) has a surface weight in the range of 5 to 800 g/m², especially 10 to 500 g/m², preferably 25 to 400 g/m², and/or in particular wherein the second filter element (2) comprises at least two layers and at least two units of the second carrier material (5), in particular wherein the second adsorbent material (3') is arranged between the layers and/or units of the second carrier material (5), and/or
wherein the load mass of the second adsorption material (3') is in the range of 10 to 99.5 wt.-%, especially 15 to 98 wt.-%, preferably 20 to 90 wt. -%, more preferably 30 to 85 wt.-% , based on the second filter element (2).

8. Filter medium according to any one of the preceding claims,
wherein the first adsorbent material (3) and/or the second adsorbent material (3') are formed of a spherical activated carbon, independently of each other, and/or
wherein the first adsorbent material (3) and the second adsorption material (3') comprise, or consist of, at least substantially identical particle-forming materials.

9. Filter medium according to any one of the preceding claims,
wherein the first adsorbent material (3) and/or the second adsorbent material (3'), independently of each other, have a particle size, and in particular a particle diameter, of at least 0.001 mm, particularly at least 0.01 mm, preferably at least 0.1 mm, more preferably at least 0.2 mm, and/or wherein the first adsorbent material (3) and/or the second adsorbent material (3'), independently of each other, have a particle size, and in particular a particle diameter, in the range of 0.001 to 5 mm, in particular 0.01 to 3 mm, preferably 0.2 to 2 mm, more preferably 0.2 to 1.5 mm, particularly preferably 0.3 to 1 mm, and/or
wherein the first adsorbent material (3) and/or the second adsorbent material (3'), independently of each other, have an average particle size, especially an average particle diameter D₅₀, of at least 0.01 mm, especially at least 0.05 mm, preferably at least 0.1 mm, more preferably at least 0.2 mm, particularly preferably at least 0.3 mm, and/or wherein the first adsorbent material (3) and/or the second adsorbent material (3'), independently of each other, have an average particle size, especially an average particle diameter D₅₀, in the range of 0.01 to 4 mm, in particular 0.05 to 2 mm, preferably 0.1 to 1.5 mm, more preferably 0.2 to 1.2 mm, particularly preferably 0.3 to 1 mm.

10. Filter medium according to any one of the preceding claims, wherein the first adsorption material (3) and the second adsorption material (3') differ in at least one physical and/or chemical parameter, in particular wherein the physical and/or chemical parameter is selected from the group of (i) particle size, and in particular average particle size and/or particle diameter, in particular average particle diameter; (ii) specific surface area, in particular the BET surface area; (iii) pore volume, in particular the adsorption and/or total pore volume; (iv) porosity and/or pore size distribution, especially the micropore volume proportion of the total pore volume and/or average pore diameter; (v) impregnation and/or catalytic equipment, as well as (vi) particulate form, preferably particle size, in particular average particle size and/or particle diameter, in particular average particle diameter D₅₀.

11. Filter medium according to any one of the preceding claims, wherein the first adsorbent material (3) and the second adsorption material (3') have different particle sizes, particularly different average particle sizes and/or particle diameters, in particular different average particle diameters D₅₀, in particular wherein the first adsorbent material (3), compared to the second adsorption material (3'), has a greater particle size, especially a larger average particle size and/or a larger particle diameter, and in particular a larger average particle diameter D₅₀, and/or in particular wherein the second adsorbent material (3'), compared to the first adsorption material (3), has a smaller particle size, in particular a smaller average particle size and/or a smaller particle diameter, particularly a smaller average particle diameter D₅₀.

12. Filter medium according to any one of the preceding claims, wherein the particle size, in particular the particle diameter, preferably the average particle diameter D₅₀ of the first adsorption material (3) on the one hand and the second adsorbent material (3') on the other, differ from each other by a factor of at least 1.1, in particular at least 1.25, preferably at least 1.5, more preferably at least 2, particularly preferably at least 5, most preferably at least 10, respectively based on the smaller particle size value, and/or wherein the particle size, in particular, the particle diameter, preferably the average particle diameter D₅₀ of the first adsorption material (3) on the one hand and the second adsorbent material (3') on the other, differ from each other by at least 0.001 mm, particularly at least 0.01 mm, preferably at least 0.05 mm, more preferably at least 0.1 mm, in particular with the proviso that the first adsorption material (3) has the larger values, and/or, in particular with the proviso that the second adsorbent material (3') has the smaller values.

13. Filter medium according to one of the preceding claims, wherein the filter medium (FM) has at least one particulate and/or aerosol filter layer (6), in particular wherein the particulate and/or aerosol filter layer (6) is positioned and/or arranged upstream of the filter elements (1, 2) and/or in particular wherein the particulate and/or aerosol filter layer (6) is located upstream of the filter elements (1, 2).

14. Use of a filter medium according to any one of the preceding claims
for sorptive, in particular adsorptive applications, preferably for gas purification and/or gas treatment, preferably for air treatment and/or air purification, and/or
for the removal of pollutants, especially gaseous pollutants, or environmental pollutants, harmful or toxic substances or gases, preferably chemical and/or biological poisons and/or pollutants.

15. Filters and filter materials, in particular for the removal of pollutants, odours and toxins of all kinds, in particular from air and/or gas flows, such as NBC protective mask filters, odour filters, sheet filters, air filters, in particular filters for indoor air cleaning, adsorption-capable supporting structures and filters for the medical sector, produced using at least one filter medium according to any one of the preceding claims and/or comprising at least one filter medium according to any one of the preceding claims.

## Revendications

1. Milieu filtrant (FM) adsorbant, en particulier pour purifier des gaz et/ou des mélanges gazeux, de préférence l'air, et/ou en particulier pour éliminer des poisons et/ou polluants chimiques et/ou biologiques de gaz et/ou de mélanges gazeux, de préférence l'air,
le milieu filtrant (FM) comportant :
- un grand nombre d'un premier élément filtrant (1) ayant un premier matériau adsorbant (3) sous forme de particules adsorbantes, et
- un grand nombre d'un deuxième élément filtrant (2), différent du premier élément filtrant (1), comportant un deuxième matériau adsorbant (3') sous forme de particules adsorbantes,
le premier matériau adsorbant (3) et le deuxième matériau adsorbant (3') étant indépendamment l'un de l'autre formés de charbon actif granulaire,
les premiers éléments filtrants (1) et les deuxièmes élément filtrants (2) étant disposés en empilement et/ou étant empilés les uns sur les autres,
au moins un premier élément filtrant (1) étant disposé en amont d'au moins un deuxième élément filtrant (2),
le premier élément filtrant (1) et le deuxième élément filtrant (2) présentant des pertes de charge différentes l'une de l'autre et/ou des résistances à l'écoulement (au passage) différentes l'une de l'autre, le deuxième élément filtrant (2) présentant une perte de charge plus grande et/ou une résistance à l'écoulement (au passage) plus grande que le premier élément filtrant (1), et
un deuxième élément filtrant (2) étant disposé en aval, en tant qu'élément filtrant (1, 2) positionné en dernier, le deuxième élément filtrant (2) positionné en dernier en aval présentant une perte de charge plus grande et/ou une résistance à l'écoulement (au passage) plus grande que les éléments filtrants (1, 2) disposés en amont par rapport à l'élément filtrant positionné en dernier.

2. Milieu filtrant selon la revendication 1,
le milieu filtrant (FM) étant délimité en amont par au moins un premier élément filtrant (1), et/ou
le premier élément filtrant (1) positionné en premier en aval présentant une perte de charge plus faible ou une résistance à l'écoulement (au passage) plus faible que les éléments filtrants (1, 2) disposés en aval de l'élément filtrant positionné en premier.

3. Milieu filtrant selon la revendication 1 ou 2,
les premiers éléments filtrants (1) et les deuxièmes éléments filtrants (2) étant disposés d'une manière alternée, et/ou en alternance les uns par rapport aux autres, et/ou périodiquement, et/ou
les premiers éléments filtrants (1) étant disposés en blocs et/ou sous forme d'au moins un bloc (B1), en particulier le bloc (B1) des premiers éléments filtrants (1) comprenant au moins deux, de préférence trois ou plus, premiers éléments filtrants (1), et/ou plusieurs premiers éléments filtrants (1), en particulier au moins deux, de préférence trois ou plus premiers éléments filtrants (1), étant empilés les uns sur les autres et/ou étant disposés en se suivant directement les uns les autres, et/ou
les deuxièmes éléments filtrants (2) étant disposés en blocs et/ou sous forme d'au moins un bloc (B2), en particulier le bloc (B2) des deuxièmes éléments filtrants (2) comprenant au moins deux, de préférence trois ou plus deuxièmes éléments filtrants (2), et/ou plusieurs deuxièmes éléments filtrants (2), en particulier au moins deux, de préférence trois ou plus deuxièmes éléments filtrants (2), étant empilés les uns sur les autres et/ou étant disposés en se suivant directement les uns les autres, et/ou
les premiers éléments filtrants (1) et/ou les deuxièmes éléments filtrants (2) étant disposés d'une manière alternée en blocs et/ou en alternance les uns par rapport aux autres par blocs et/ou périodiquement par blocs, et/ou
le milieu filtrant (FM) étant en amont délimité par au moins un bloc (B1) des premiers éléments filtrants (1), en particulier le bloc (B1) comprenant au moins deux, de préférence trois ou plus premiers éléments filtrants (1), et/ou au moins un bloc (B1) des premiers éléments filtrants (1) étant disposé en aval en tant que bloc positionné en premier, en particulier le bloc (B1) comprenant au moins deux, de préférence trois ou plus premiers éléments filtrants (1), et/ou
le milieu filtrant (FM) étant délimité en aval par au moins un bloc (B2) des deuxièmes éléments filtrants (2), en particulier le bloc (B2) comprenant au moins deux, de préférence trois ou plus deuxièmes éléments filtrants (2), et/ou au moins un bloc (B2) des deuxièmes éléments filtrants (2) étant disposé en aval en tant que bloc positionné en dernier, en particulier le bloc (B2) comprenant au moins deux, de préférence trois ou plus deuxièmes éléments filtrants (2).

4. Milieu filtrant selon l'une des revendications précédentes,
le milieu filtrant (FM) et/ou le premier élément filtrant (1) et/ou le deuxième élément filtrant (2) étant conçus sous forme de boîtes et/ou sous forme de parallélépipèdes et/ou sous forme de cylindres, en particulier sous forme de cylindres, et/ou
le premier élément filtrant (1) et/ou le deuxième élément filtrant (2), en particulier le premier élément filtrant (1) et le deuxième élément filtrant (2) étant, par chacune de leurs surfaces limites au moins pour l'essentiel planaires et/ou planes, et/ou par leurs plans d'extension principale, disposés au moins pour l'essentiel perpendiculairement à la direction principale de l'écoulement par passage, et/ou
le premier élément filtrant (1) et le deuxième élément filtrant (2) présentant des largeurs et/ou des profondeurs au moins pour l'essentiel identiques et/ou des diamètres au moins pour l'essentiel identiques (d1, d2), par rapport à l'extension transversale et/ou perpendiculaire par rapport à la direction de l'écoulement principal par passage.

5. Milieu filtrant selon l'une des revendications précédentes,
la masse volumique (D1) du premier élément filtrant (1) étant inférieure à la masse volumique (D2) du deuxième élément filtrant (2), et/ou
la masse volumique (D2) du deuxième élément filtrant (2) étant d'un facteur compris dans la plage de 1,01 à 50, en particulier de 1,05 à 40, de préférence de 1,075 à 30, de préférence de 1,1 à 25, d'une manière particulièrement préférée de 1,15 à 20, supérieure à la masse volumique (D1) du premier élément filtrant (1), et/ou la masse volumique (D2) du deuxième élément filtrant (2) étant d'un facteur d'au moins 1,01, en particulier d'au moins 1,05, de préférence d'au moins 1,075, d'une manière préférée d'au moins 1,1, d'une manière particulièrement préférée d'au moins 1,15, supérieure à la masse volumique (D1) du premier élément filtrant (1), et/ou la masse volumique (D2) du deuxième élément filtrant (2) étant d'au moins 1 %, en particulier d'au moins 2,5 %, de préférence d'au moins 5 %, d'une manière préférée d'au moins 10 %, d'une manière particulièrement préférée d'au moins 20 %, d'une manière tout particulièrement préférée d'au moins 25 %, supérieure à la masse volumique (D1) du premier élément filtrant (1), par rapport à la masse volumique (D1) du premier élément filtrant (1) et/ou
le rapport entre la masse volumique (D2) du deuxième élément filtrant (2) et la masse volumique (D1) du premier élément filtrant (1) [rapport D2:D1] étant compris dans la plage de 10:1 à 1,05:1, en particulier de 8:1 à 1,1:1, de préférence de 6:1 à 1,15:1, d'une manière préférée de 5:1 à 1,2:1, d'une manière particulièrement préférée de 3:1 à 1,3:1, d'une manière tout particulièrement préférée de 2:1 à 1,5:1, et/ou
le premier élément filtrant (1) présentant une masse volumique (D1) comprise dans la plage de 50 kg/m³ à 800 kg/m³, en particulier de 100 kg/m³ à 600 kg/m³, de préférence de 150 kg/m³ à 500 kg/m³, d'une manière préférée de 200 kg/m³ à 450 kg/m³, d'une manière particulièrement préférée de 250 kg/m³ à 350 kg/m³, en particulier à la condition que la masse volumique (D1) du premier élément filtrant (1) soit inférieure à la masse volumique (D2) du deuxième élément filtrant (2) et/ou
le deuxième élément filtrant (2) présentant une masse volumique (D2) comprise dans la plage de 100 kg/m³ à 1250 kg/m³, en particulier de 150 kg/m³ à 1000 kg/m³, de préférence de 200 kg/m³ à 800 kg/m³, d'une manière préférée de 250 kg/m³ à 600 kg/m³, d'une manière particulièrement préférée de 350 kg/m³ à 500 kg/m³, d'une manière tout particulièrement préférée de 375 kg/m³ à 450 kg/m³, en particulier à la condition que la masse volumique (D2) du deuxième élément filtrant (2) soit supérieure à la masse volumique (D1) du premier élément filtrant (1).

6. Milieu filtrant selon l'une des revendications précédentes,
la perte de charge et/ou la résistance à l'écoulement (au passage) du deuxième élément filtrant (2) étant d'un facteur compris dans la plage de 1,5 à 300, en particulier de 2 à 250, de préférence de 3 à 200, d'une manière préférée compris dans la plage de 4 à 150, d'une manière particulièrement préférée de 5 à 100, supérieures à la perte de charge et/ou à la résistance à l'écoulement (au passage) du premier élément filtrant (1), et/ou la perte de charge et/ou la résistance à l'écoulement (au passage) du deuxième élément filtrant (2) étant d'un facteur d'au moins 1,5, en particulier d'au moins 2, de préférence d'au moins 3, d'une manière préférée d'au moins 4, d'une manière particulièrement préférée d'au moins 5, supérieures à la perte de charge et/ou à la résistance à l'écoulement (au passage) du premier élément filtrant (1), et/ou
le rapport entre la perte de charge et/ou la résistance à l'écoulement (au passage) du deuxième élément filtrant (2) et la perte de charge et/ou la résistance à l'écoulement (au passage) du premier élément filtrant (1) étant compris dans la plage de 500:1 à 1,5:1, en particulier de 400:1 à 1,75:1, de préférence de 300:1 à 2:1, d'une manière préférée de 200:1 à 3:1, d'une manière particulièrement préférée de 150:1 à 4:1, d'une manière tout particulièrement préférée de 100:1 à 5:1, et/ou
le premier élément filtrant (1) présentant une perte de charge et/ou une résistance à l'écoulement (au passage) comprises dans la plage de 0,1 Pa/cm à 100 Pa/cm, en particulier de 0,25 Pa/cm à 75 Pa/cm, de préférence de 0,5 Pa/cm à 50 Pa/cm, d'une manière préférée de 0,75 Pa/cm à 30 Pa/cm, d'une manière particulièrement préférée de 1 Pa/cm à 25 Pa/cm, en particulier à la condition que la perte de charge et/ou la résistance à l'écoulement (au passage) du premier élément filtrant (1) soient inférieures à la perte de charge et/ou à la résistance à l'écoulement (au passage) du deuxième élément filtrant (2), et/ou
le deuxième élément filtrant (2) présentant une perte de charge et/ou une résistance à l'écoulement (au passage) comprises dans la plage de 1 Pa/cm à 250 Pa/cm, en particulier de 2 Pa/cm à 200 Pa/cm, de préférence de 3 Pa/cm à 150 Pa/cm, d'une manière préférée de 5 Pa/cm à 125 Pa/cm, d'une manière particulièrement préférée de 10 Pa/cm à 100 Pa/cm, en particulier à la condition que la perte de charge et/ou la résistance à l'écoulement (au passage) du deuxième élément filtrant (2) soient supérieures à la perte de charge et/ou à la résistance à l'écoulement (au passage) du premier élément filtrant (1).

7. Milieu filtrant selon l'une des revendications précédentes,
le premier élément filtrant (1) comprenant au moins un premier matériau support (4), en particulier le premier matériau adsorbant (3) étant fixé et/ou assujetti au premier matériau support (4), en particulier étant collé au premier matériau support (4), et en particulier le premier matériau support (4) présentant une structure tridimensionnelle, en particulier le premier matériau support étant conçu comme un matériau mousse de préférence à alvéoles ouverts, de préférence une mousse de polyuréthanne, d'une manière particulièrement préférée une mousse de polyuréthanne réticulée, et en particulier le diamètre moyen des pores de la mousse étant au moins deux fois plus grand, en particulier au moins deux et demi fois plus grand, de préférence au moins trois fois plus grand, que la granulométrie moyenne D₅₀ du premier matériau adsorbant (3), et/ou
la quantité de charge du premier matériau adsorbant (3) étant comprise dans la plage de 5 à 90 % en poids, en particulier de 10 à 85 % en poids, de préférence de 15 à 80 % en poids, d'une manière particulièrement préférée de 20 à 75 % en poids, par rapport au premier élément filtrant (1), et/ou
le deuxième élément filtrant (2) comportant au moins un deuxième matériau support (5), en particulier le deuxième matériau adsorbant (3') étant fixé et/ou assujetti au deuxième matériau support (5), en particulier étant collé au deuxième matériau support (5), et en particulier le deuxième matériau support (5) présentant une structure bidimensionnelle et/ou plane, en particulier le deuxième matériau support (5) étant conçu comme une structure bidimensionnelle, et en particulier le deuxième matériau support (5) étant une structure bidimensionnelle textile, de préférence un matériau textile perméable à l'air, de préférence un tissu, un article tricoté, un article maille, une grille ou un composite textile, en particulier un non-tissé (nonwoven), en particulier le deuxième matériau support (5) présentant une masse surfacique comprise dans la plage de 5 à 800 g/m², en particulier de 10 à 500 g/m², d'une manière préférée de 25 à 400 g/m², et/ou en particulier le deuxième élément filtrant (2) comprenant au moins deux couches et au moins deux unités du deuxième matériau support (5), en particulier le deuxième matériau adsorbant (3') étant disposé entre les couches et/ou les unités du deuxième matériau support (5), et/ou
la quantité de charge du deuxième matériau adsorbant (3') étant comprise dans la plage de 10 à 99,5 % en poids, en particulier de 15 à 98 % en poids, de préférence de 20 à 90 % en poids, d'une manière particulièrement préférée de 30 à 85 % en poids, par rapport au deuxième élément filtrant (2).

8. Milieu filtrant selon l'une des revendications précédentes,
le premier matériau adsorbant (3) et/ou le deuxième matériau adsorbant (3') étant, indépendamment l'un de l'autre, formés à partir de charbon actif sphérique, et/ou
le premier matériau adsorbant (3) et le deuxième matériau adsorbant (3') comprenant chacun des matériaux formant des particules, au moins pour l'essentiel identiques, ou en étant constitués.

9. Milieu filtrant selon l'une des revendications précédentes,
le premier matériau adsorbant (3) et/ou le deuxième matériau adsorbant (3') présentant chacun indépendamment de l'autre une granulométrie, en particulier un diamètre des particules, d'au moins 0,001 mm, en particulier d'au moins 0,01 mm, de préférence d'au moins 0,1 mm, d'une manière préférée d'au moins 0,2 mm, et/ou le premier matériau adsorbant (3) et/ou le deuxième matériau adsorbant (3') présentant chacun indépendamment de l'autre une granulométrie, en particulier un diamètre des particules, compris dans la plage de 0,001 à 5 mm, en particulier de 0,01 à 3 mm, de préférence de 0,2 à 2 mm, d'une manière préférée de 0,2 à 1,5 mm, d'une manière particulièrement préférée de 0,3 à 1 mm, et/ou
le premier matériau adsorbant (3) et/ou le deuxième matériau adsorbant (3') présentant chacun indépendamment de l'autre une granulométrie moyenne, en particulier un diamètre moyen des particules D₅₀, d'au moins 0,01 mm, en particulier d'au moins 0,05 mm, de préférence d'au moins 0,1 mm, d'une manière préférée d'au moins 0,2 mm, d'une manière particulièrement préférée d'au moins 0,3 mm, et/ou le premier matériau adsorbant (3) et/ou le deuxième matériau adsorbant (3') présentant chacun indépendamment de l'autre une granulométrie moyenne, en particulier un diamètre moyen des particules D₅₀, comprise dans la plage de 0,01 à 4 mm, en particulier de 0,05 à 2 mm, de préférence de 0,1 à 1,5 mm, d'une manière préférée de 0,2 à 1,2 mm, d'une manière particulièrement préférée de 0,3 à 1 mm.

10. Milieu filtrant selon l'une des revendications précédentes, le premier matériau adsorbant (3) et le deuxième matériau adsorbant (3') se distinguant par au moins un paramètre physique et/ou chimique, en particulier le paramètre physique et/ou chimique étant choisi dans le groupe consistant en (i) la granulométrie, en particulier la granulométrie moyenne et/ou le diamètre moyen des particules, en particulier le diamètre moyen des particules ; (ii) l'aire spécifique, en particulier l'aire BET ; (iii) le volume des pores, en particulier le volume d'adsorption et/ou le volume total des pores ; (iv) la porosité et/ou la répartition des pores, en particulier la proportion volumique des micropores par rapport au volume total des pores et/ou le diamètre moyen des pores ; (v) l'imprégnation et/ou le traitement catalytique, ainsi que (vi) la forme des particules, de préférence la granulométrie, en particulier la granulométrie moyenne et/ou le diamètre moyen des particules, en particulier le diamètre moyen des particules D₅₀.

11. Milieu filtrant selon l'une des revendications précédentes, le premier matériau adsorbant (3) et le deuxième matériau adsorbant (3') présentant des granulométries différentes, en particulier des granulométries moyennes différentes et/ou des diamètres moyens des particules différents, en particulier des diamètres moyens des particules D₅₀ différents, en particulier le premier matériau adsorbant (3) présentant par comparaison avec le deuxième matériau adsorbant (3') une granulométrie plus grosse, en particulier une granulométrie moyenne plus grosse et/ou un diamètre des particules plus grand, en particulier un diamètre moyen des particules D₅₀ plus grand, et/ou en particulier le deuxième matériau adsorbant (3') présentant par comparaison avec le premier matériau adsorbant (3) une granulométrie plus petite, en particulier une granulométrie moyenne plus petite et/ou un diamètre des particules plus petit, en particulier un diamètre moyen des particules D₅₀ plus petit.

12. Milieu filtrant selon l'une des revendications précédentes, les granulométries, en particulier les diamètres des particules, de préférence les diamètres moyens des particules D₅₀, du premier matériau adsorbant (3) d'une part et du deuxième matériau adsorbant (3') d'autre part, différant l'une de l'autre au moins par un facteur 1,1, en particulier au moins par un facteur 1,25, de préférence au moins par un facteur 1,5, d'une manière préférée au moins par un facteur 2, d'une manière particulièrement préférée au moins par un facteur 5, d'une manière tout particulièrement préférée au moins par un facteur 10, chacune par rapport à la valeur la plus petite de la granulométrie, et/ou les granulométries, en particulier les diamètres des particules, de préférence les diamètres moyens des particules D₅₀, du premier matériau adsorbant (3) d'une part et du deuxième matériau adsorbant (3') d'autre part, différant d'au moins 0,001 mm, en particulier d'au moins 0,01 mm, de préférence d'au moins 0,05 mm, de préférence d'au moins 0,1 mm, en particulier à la condition que le premier matériau adsorbant (3) présente les valeurs les plus grandes et/ou en particulier à la condition que le deuxième matériau adsorbant (3') présente les valeurs les plus petites.

13. Milieu filtrant selon l'une des revendications précédentes, le milieu filtrant (FM) présentant au moins une couche (6) filtrant les particules et/ou les aérosols, en particulier la couche (6) filtrant les particules et/ou les aérosols étant positionnée et/ou disposée en amont par rapport aux éléments filtrants (1, 2) et/ou en particulier la couche (6) filtrant les particules et/ou les aérosols étant disposée en avant, dans la direction vers l'amont, des éléments filtrants (1, 2).

14. Utilisation d'un milieu filtrant selon l'une des revendications précédentes,
pour des applications par sorption, en particulier par adsorption, de préférence pour la purification des gaz et/ou le traitement des gaz, de préférence pour la purification de l'air et/ou la préparation de l'air, et/ou
pour éliminer des polluants, en particulier des polluants gazeux, ou des substances ou gaz dangereux pour l'environnement, dangereux pour la santé ou toxiques, de préférence des poisons et/ou polluants chimiques et/ou biologiques.

15. Filtres et matériaux filtrants, en particulier pour éliminer des polluants, des substances à mauvaise odeur et des poisons de tout type, en particulier à partir de courants d'air et/ou gazeux, tels que les filtres pour masques de protection ABC, les filtres anti-odeur, les filtres de surface, les filtres à air, en particulier les filtres pour la purification de l'air ambiant, les structures supports adsorbantes et les filtres pour le domaine médical, fabriqués par utilisation d'au moins un milieu filtrant selon l'une des revendications précédentes et/ou comportant au moins un milieu filtrant selon l'une des revendications précédentes.
